# EUROPEAN PATENT APPLICATION

(11) **EP 4 776 726 A1**
(43) Date of publication of application: **15.07.2026**
(21) Application number: 23951220.5
(22) Date of filing: 08.09.2023
(51) Int. Cl.: H04W 72/23

(54) **WIRELESS COMMUNICATION METHOD AND APPARATUS, DEVICE, AND STORAGE MEDIUM**

(71) Applicant: GUANGDONG OPPO MOBILE TELECOMMUNICATIONS CORP., LTD., Dongguan, Guangdong 523860 (CN)
(72) Inventor: WU, Zuomin, Dongguan, Guangdong 523860 (CN)
(74) Representative: Taor, Simon Edward William
(86) International application number: PCT/CN2023/117830
(87) International publication number: WO 2025/050401

(57) **Abstract**

A wireless communication method and apparatus, a device, and a storage medium, relating to the technical field of communications. The method comprises: receiving first indication information sent by a network device, the first indication information being used for determining first information and/or second information, the first information being used for determining a time domain resource on which the network device provides a service for a first cell, and the second information being used for determining a time domain resource on which the network device does not provide a service for the first cell (810); and on the basis of the first indication information, determining a resource used for transmission in the first cell and/or a resource not used for transmission in the first cell (820). According to the method, the terminal device may turn on a radio frequency for uplink and downlink communication within a period of time in which the network device provides a service for the cell where the terminal device is located, and turn off the radio frequency to stop the uplink and downlink communication within a period of time in which the network device does not plan to provide a service for the cell where the terminal device is located, so that the accuracy of signal transmission is improved. In addition, meaningless power consumption is avoided, so that the purpose of power saving of the terminal device is achieved.

## Description

### TECHNICAL FIELD

Embodiments of the present disclosure relate to the field of communication technologies, and in particular, to a wireless communication method, apparatus, device, and storage medium.

### BACKGROUND

In a discontinuous communication transmission scenario of an NTN (Non-Terrestrial Networks) system, a satellite implements cell coverage through beam sweeping. For each cell, the time during which the cell is served is discontinuous. In this scenario, how to improve the accuracy of signal transmission requires further discussion and research.

### SUMMARY

Embodiments of the present disclosure provide a wireless communication method, apparatus, device, and storage medium. The technical solutions are as follows:

According to an aspect of an embodiment of the present disclosure, a wireless communication method is provided. The method is performed by a terminal device and includes:
receiving first indication information sent by a network device, the first indication information being used to determine first information and/or second information, the first information being used to determine a time domain resource in which the network device provides service for a first cell, the second information being used to determine a time domain resource in which the network device does not provide service for the first cell, the first cell being a serving cell of the terminal device;
determining, according to the first indication information, a resource for transmission in the first cell and/or a resource not for transmission in the first cell.

According to another aspect of an embodiment of the present disclosure, a wireless communication method is provided. The method is performed by a network device and includes:
sending first indication information to a terminal device, the first indication information being used to determine first information and/or second information, the first information being used to determine a time domain resource in which the network device provides service for a first cell, the second information being used to determine a time domain resource in which the network device does not provide service for the first cell, the first cell being a serving cell of the terminal device.

According to another aspect of an embodiment of the present disclosure, a device for wireless communication is provided. The device is disposed in a terminal device and includes:
a receiving module, configured to receive first indication information sent by a network device, the first indication information being used to determine first information and/or second information, the first information being used to determine a time domain resource in which the network device provides service for a first cell, the second information being used to determine a time domain resource in which the network device does not provide service for the first cell, the first cell being a serving cell of the terminal device;
a processing module, configured to determine, according to the first indication information, a resource for transmission in the first cell and/or a resource not for transmission in the first cell.

According to an aspect of an embodiment of the present disclosure, a device for wireless communication is provided. The device is disposed in a network device and includes:
a sending module, configured to send first indication information to a terminal device, the first indication information being used to determine first information and/or second information, the first information being used to determine a time domain resource in which the network device provides service for a first cell, the second information being used to determine a time domain resource in which the network device does not provide service for the first cell, the first cell being a serving cell of the terminal device.

According to an aspect of an embodiment of the present disclosure, a communication device is provided. The communication device includes a processor and a memory, where a computer program is stored in the memory, and the processor executes the computer program to implement the wireless communication method on the terminal device side as described above, or to implement the wireless communication method on the network device side as described above. The communication device is a terminal device or a network device.

According to an aspect of an embodiment of the present disclosure, a computer-readable storage medium is provided. A computer program is stored in the storage medium, and the computer program is configured to be executed by a processor to implement the wireless communication method on the terminal device side as described above, or to implement the wireless communication method on the network device side as described above.

According to an aspect of an embodiment of the present disclosure, a chip is provided. The chip includes a programmable logic circuit and/or program instructions, and when the chip runs, it is configured to implement the wireless communication method on the terminal device side as described above, or to implement the wireless communication method on the network device side as described above.

According to an aspect of an embodiment of the present disclosure, a computer program product is provided. The computer program product includes computer instructions stored in a computer-readable storage medium. A processor reads and executes the computer instructions from the computer-readable storage medium to implement the wireless communication method on the terminal device side as described above, or to implement the wireless communication method on the network device side as described above.

The technical solutions provided by the embodiments of the present disclosure may include the following beneficial effects:
The terminal device receives indication information from the network device to obtain a time period during which the network device provides service for the terminal device, or to obtain a time period during which the network device does not provide service for the terminal device. The terminal device can switch on the radio frequency for uplink and downlink communication during the time period when the network device provides service for the cell where the terminal device is located, and switch off the radio frequency to stop uplink and downlink communication during the time period when the network device does not plan to provide service for the cell where the terminal device is located, thereby improving the accuracy of signal transmission. Moreover, meaningless power consumption is avoided, achieving the purpose of power saving for the terminal device. Additionally, the terminal device can also determine valid resources in the cell network according to the above indication information.

### BRIEF DESCRIPTION OF DRAWINGS

FIG. 1 is a schematic architectural diagram of a communication system provided by an embodiment of the present disclosure;
FIG. 2 is a schematic architectural diagram of another communication system provided by an embodiment of the present disclosure;
FIG. 3 is a schematic architectural diagram of another communication system provided by an embodiment of the present disclosure;
FIG. 4 is a schematic architectural diagram of another communication system provided by an embodiment of the present disclosure;
FIG. 5 is a schematic architectural diagram of another communication system provided by an embodiment of the present disclosure;
FIG. 6 is a schematic architectural diagram of another communication system provided by an embodiment of the present disclosure;
FIG. 7 is a schematic diagram of discontinuous communication transmission provided by an embodiment of the present disclosure;
FIG. 8 is a flowchart of a wireless communication method provided by an embodiment of the present disclosure;
FIG. 9 is a schematic diagram of service time length of a cell group provided by an embodiment of the present disclosure;
FIG. 10 is a schematic diagram of service time length of a cell group provided by another embodiment of the present disclosure;
FIG. 11 is a block diagram of a device for wireless communication provided by an embodiment of the present disclosure;
FIG. 12 is a block diagram of another device for wireless communication provided by an embodiment of the present disclosure;
FIG. 13 is a schematic structural diagram of a terminal device provided by an embodiment of the present disclosure;
FIG. 14 is a schematic structural diagram of a network device provided by an embodiment of the present disclosure.

### DETAILED DESCRIPTION

To make the objectives, technical solutions, and advantages of the present disclosure clearer, the implementations of the present disclosure will be further described in detail below with reference to the accompanying drawings.

The network architecture and service scenarios described in the embodiments of the present disclosure are intended to illustrate the technical solutions of the embodiments of the present disclosure more clearly, and do not constitute a limitation on the technical solutions provided by the embodiments of the present disclosure. Those of ordinary skill in the art will appreciate that with the evolution of the network architecture and the emergence of new service scenarios, the technical solutions provided by the embodiments of the present disclosure are also applicable to similar technical problems.

The technical solutions of the embodiments of the present disclosure can be applied to various communication systems, for example: a Global System of Mobile communication (GSM) system, a Code Division Multiple Access (CDMA) system, a Wideband Code Division Multiple Access (WCDMA) system, a General Packet Radio Service (GPRS), a Long Term Evolution (LTE) system, an Advanced long term evolution (LTE-A) system, a New Radio (NR) system, an evolution system of the NR system, an LTE-based access to unlicensed spectrum (LTE-U) system, an NR-based access to unlicensed spectrum (NR-U) system, a non-terrestrial communication network system, a Universal Mobile Telecommunication System (UMTS), a Wireless Local Area Networks (WLAN), Wireless Fidelity (WiFi), a fifth-generation (5G) communication system, a sixth-generation (6G) communication system, or other communication systems.

Generally, traditional communication systems support a limited number of connections and are easy to implement. However, with the development of communication technologies, mobile communication systems will not only support traditional communication but will also support, for example, Device to Device (D2D) communication, Machine to Machine (M2M) communication, Machine Type Communication (MTC), Vehicle to Vehicle (V2V) communication, or Vehicle to everything (V2X) communication, etc. The embodiments of the present disclosure may also be applied to these communication systems.

The communication system in the embodiments of the present disclosure may be applied to a Carrier Aggregation (CA) scenario, may also be applied to a Dual Connectivity (DC) scenario, and may also be applied to a Standalone (SA) deployment scenario.

The communication system in the embodiments of the present disclosure may be applied to unlicensed spectrum, where the unlicensed spectrum may also be considered as shared spectrum; or the communication system in the embodiments of the present disclosure may also be applied to licensed spectrum, where the licensed spectrum may also be considered as non-shared spectrum.

Communication system scenarios include a non-terrestrial communication network (NTN) system and a terrestrial communication network (TN) system. Among them, NTN generally uses satellite communication to provide communication services to ground users. NTN systems currently include NR-NTN and IoT-NTN (Internet of Things NTN) systems, and may subsequently include other NTN systems.

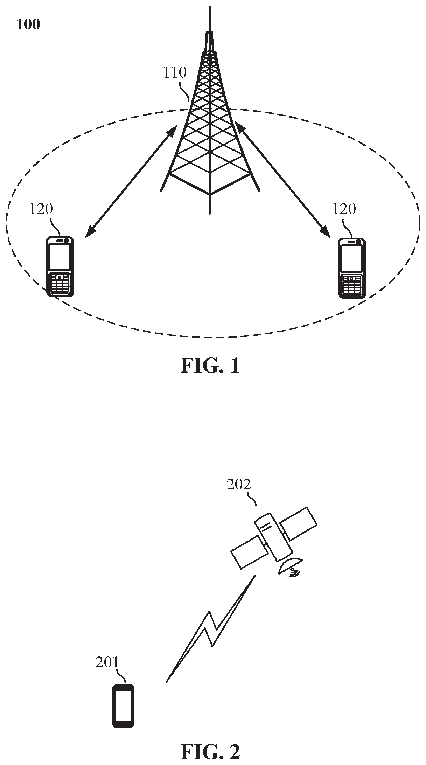

Exemplarily, FIG. 1 is a schematic architectural diagram of a communication system provided by an embodiment of the present disclosure. As shown in FIG. 1, a communication system 100 may include a network device 110. The network device 110 may be a device that communicates with terminal devices 120. The network device 110 may provide communication coverage for a specific geographical area and may communicate with terminal devices located within the coverage area.

FIG. 1 exemplarily shows one network device 110 and two terminal devices 120. In some embodiments of the present disclosure, the communication system 100 may include multiple network devices and the coverage area of each network device may include other numbers of terminal devices, which is not limited in the embodiments of the present disclosure.

Exemplarily, FIG. 2 is a schematic architectural diagram of another communication system provided by an embodiment of the present disclosure. Referring to FIG. 2, the communication system may include a terminal device 201 and a satellite 202. The terminal device 201 and the satellite 202 can perform wireless communication. The network formed between the terminal device 201 and the satellite 202 may also be referred to as an NTN. In the architecture of the communication system shown in FIG. 2, the satellite 202 may have the function of a base station, and the terminal device 201 and the satellite 202 can communicate directly. In this system architecture, the satellite 202 may be referred to as a network device. In some embodiments of the present disclosure, the communication system may include multiple satellites 202, and the coverage area of each network satellite 202 may include other numbers of terminal devices, which is not limited in the embodiments of the present disclosure.

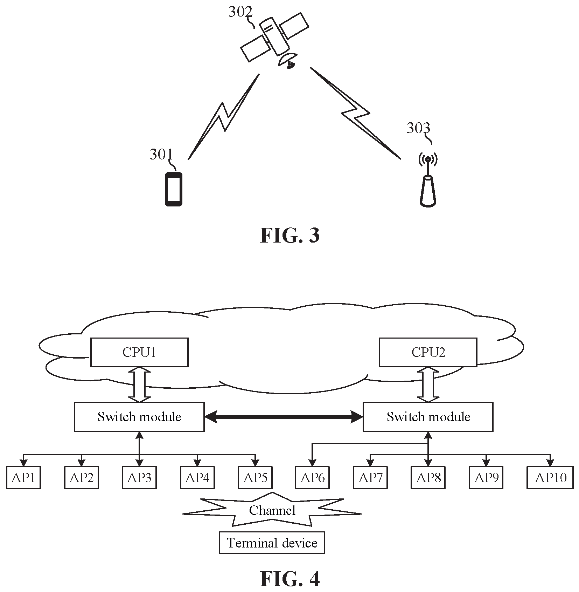

Exemplarily, FIG. 3 is a schematic architectural diagram of another communication system provided by an embodiment of the present disclosure. Referring to FIG. 3, the communication system includes a terminal device 301, a satellite 302, and a base station 303. The terminal device 301 and the satellite 302 can perform wireless communication, and the satellite 302 and the base station 303 can communicate. The network formed between the terminal device 301, the satellite 302, and the base station 303 may also be referred to as an NTN. In the architecture of the communication system shown in FIG. 3, the satellite 302 may not have the function of a base station, and communication between the terminal device 301 and the base station 303 requires relaying through the satellite 302. In this system architecture, the base station 303 may be referred to as a network device. In some embodiments of the present disclosure, the communication system may include multiple base stations 303, each base station 303 may communicate with one or more satellites 302, and the coverage area of each satellite 302 may include other numbers of terminal devices, which is not limited in the embodiments of the present disclosure.

In future evolved communication systems such as B5G (Beyond 5G) or 6G, scenarios including Distributed Multi-Input Multi-Output (Distributed MIMO, also known as distributed antenna systems) and/or Massive Multi-Input Multi-Output (Massive MIMO, also known as massive antenna matrix systems) may also be included. In some cases, Distributed MIMO and/or Massive MIMO may also support cell-free or UE-centric deployment scenarios. It should be understood that the above scenarios are also applicable to TN and/or NTN.

Exemplarily, FIG. 4 is a schematic architectural diagram of another communication system provided by an embodiment of the present disclosure. The system architecture includes distributed antenna ports (or distributed antenna port clusters), and/or a Central Processing Unit (CPU), and/or a switch module. As shown in FIG. 4, the communication system may include multiple distributed antenna ports (or distributed antenna port clusters). Different distributed antenna ports (or distributed antenna port clusters) are connected to the CPU through the switch module. The terminal device selects an appropriate distributed antenna port (or distributed antenna port cluster) to serve it based on its geographical location area. FIG. 4 exemplarily shows 2 CPUs, 2 switch modules, 10 distributed antenna ports (denoted by AP1~AP10), and 1 terminal device. In some embodiments of the present disclosure, the communication system may include other numbers of CPUs, and/or other numbers of switch modules, and/or other numbers of distributed antenna ports (or distributed antenna port clusters), and/or other numbers of terminal devices, which is not limited in the embodiments of the present disclosure.

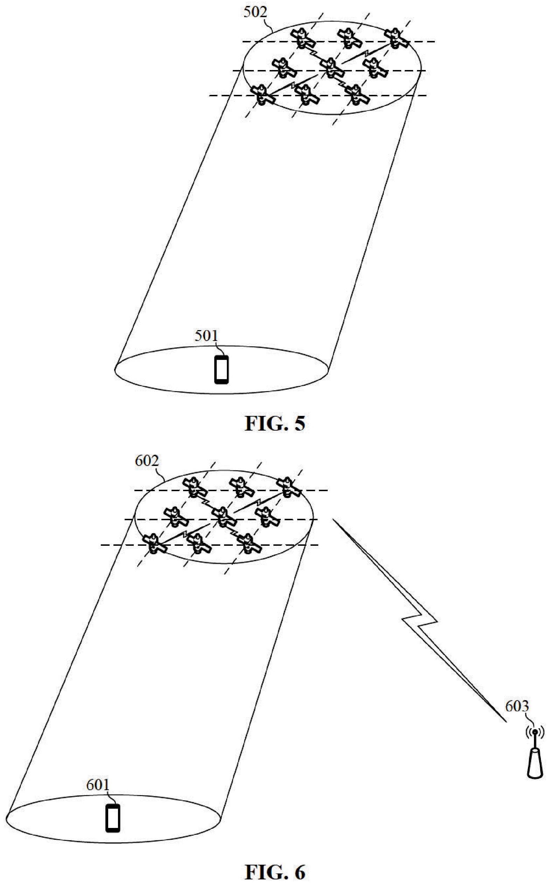

Exemplarily, FIG. 5 is a schematic architectural diagram of another communication system provided by an embodiment of the present disclosure. Referring to FIG. 5, it includes a terminal device 501 and a satellite cluster 502. The terminal device 501 and the satellite cluster 502 can perform wireless communication. The network formed between the terminal device 501 and the satellite cluster 502 may also be referred to as an NTN. In the architecture of the communication system shown in FIG. 5, at least one satellite in the satellite cluster 502 (for example, the satellite located at the center position) may have the function of a base station, and the terminal device 501 and the satellite cluster 502 can communicate directly. In this system architecture, the satellite having the base station function may be referred to as a network device. In some embodiments of the present disclosure, the communication system may include multiple satellite clusters, and/or each satellite cluster includes one or more network devices, and/or the coverage area of each satellite cluster or each network device may include other numbers of terminal devices, which is not limited in the embodiments of the present disclosure.

Exemplarily, FIG. 6 is a schematic architectural diagram of another communication system provided by an embodiment of the present disclosure. Referring to FIG. 6, it includes a terminal device 601, a satellite cluster 602, and a base station 603. The terminal device 601 and the satellite cluster 602 can perform wireless communication, and the satellite cluster 602 and the base station 603 can communicate. The network formed between the terminal device 601, the satellite cluster 602, and the base station 603 may also be referred to as an NTN. In the architecture of the communication system shown in FIG. 6, the satellite cluster 602 may not have the function of a base station, and communication between the terminal device 601 and the base station 603 requires relaying through the satellite cluster 602. In this system architecture, the base station may be referred to as a network device. In some embodiments of the present disclosure, the communication system may include multiple satellite clusters, and/or one network device is associated with one or more satellite clusters, and/or includes multiple network devices, and/or the coverage area of each network device may include other numbers of terminal devices, which is not limited in the embodiments of the present disclosure.

The terminal device mentioned in the embodiments of the present disclosure may refer to a User Equipment (UE), an access terminal, a subscriber unit, a subscriber station, a mobile station, a mobile platform, a remote station, a remote terminal, a mobile device, a wireless communication device, a user agent, or a user apparatus. Optionally, the terminal device may also be a cellular phone, a cordless phone, a Session Initiation Protocol (SIP) phone, a Wireless Local Loop (WLL) station, a Personal Digital Assistant (PDA), a handheld device with wireless communication function, a computing device, or other processing device connected to a wireless modem, an in-vehicle device, a wearable device, a terminal device in a 5th Generation System (5GS), or a terminal device in a future evolved Public Land Mobile Network (PLMN), etc., which is not limited in the embodiments of the present disclosure. For convenience of description, the above-mentioned devices are collectively referred to as terminal devices. In the embodiments of the present disclosure, "terminal device" and "UE" are generally used interchangeably, but those skilled in the art can understand that they can express the same meaning.

The network device mentioned in the embodiments of the present disclosure may be an access network device, which may be located on the ground or on a satellite. The access network device is a device deployed in the access network to provide wireless communication functions for terminal devices. The access network device may include various forms of macro base stations, micro base stations, relay stations, access points, etc. In systems using different radio access technologies, the name of the device having the function of the access network device may be different, for example, in a 5G NR system, it is called a gNodeB or gNB. As communication technology evolves, the name "access network device" may change. For convenience of description, in the embodiments of the present disclosure, the above-mentioned apparatuses that provide wireless communication functions for terminal devices are collectively referred to as access network devices. Optionally, a communication relationship can be established between the terminal device and a core network device through the access network device.

The "5G NR system" in the embodiments of the present disclosure may also be called a 5G system or an NR system, but those skilled in the art can understand its meaning. The technical solutions described in the embodiments of the present disclosure may be applied to LTE systems, may also be applied to 5G NR systems, may also be applied to subsequent evolved systems of 5G NR systems (e.g., 6G systems), and may also be applied to other communication systems such as an NB-IoT (Narrow Band Internet of Things) system, which is not limited in the present disclosure.

In the embodiments of the present disclosure, the network device may provide services for a cell, and the terminal device communicates with the network device using transmission resources (e.g., frequency domain resources, or spectrum resources) on a carrier used by the cell. The cell may be a cell corresponding to a network device (e.g., a base station). The cell may belong to a macro base station, or may belong to a base station corresponding to a small cell. The small cell here may include: a Metro cell, a Micro cell, a Pico cell, a Femto cell, etc. These small cells have the characteristics of small coverage range and low transmission power, and are suitable for providing high-speed data transmission services.

Before introducing the technical solutions of the present disclosure, some related technical knowledge involved in the present disclosure is first introduced and explained. The following related technologies can be optionally combined with the technical solutions of the embodiments of the present disclosure, and all belong to the protection scope of the embodiments of the present disclosure. The embodiments of the present disclosure include at least part of the following content.

### 1. Initial Access Procedure in NR System

In the NR system, the initial access procedure of a terminal device can be completed by detecting a Synchronization Signal/PBCH Block (SSB or SS/PBCH block) on a synchronization raster (Sync Raster). The SSB is transmitted through a Discovery Burst Transmission Window or an SSB transmission opportunity window. The discovery signal transmission opportunity window or the SSB transmission opportunity window appears periodically, and the period can be configured by the network device through high-layer parameters.

A main function of the SSB index is to allow the terminal device to acquire system timing information. In addition, the SSB index has another function, which is to indicate the Quasi Co-Location (QCL) relationship between SSBs. QCL means that the large-scale parameters of the channel experienced by the symbols on one antenna port can be inferred from the channel experienced by the symbols on another antenna port. The large-scale parameters may include delay spread, average delay, Doppler spread, Doppler shift, and spatial reception parameters, etc. Specifically for the SSB, in the 5G NR system, SSBs carried by different beams constitute an SSB burst set. Different SSB indices correspond to different SSB time domain position information within the burst set and also correspond to specific SSB transmission beam information. SSBs with the same SSB index can be considered to have a QCL relationship; or SSBs with the same SSB index experience the same or similar large-scale parameters of the channel. The terminal device can assume that the network device uses the same beam for transmitting these SSBs; SSBs corresponding to different SSB indices are not considered to have a QCL relationship because they may come from different transmission beams of the network device and experience different channel transmission characteristics.

During the initial access procedure, the terminal device attempts to search for synchronization signals at pre-defined possible time-frequency positions of the SSB, and after detecting the synchronization signal, demodulates the PBCH in the SSB. The terminal device combines and detects synchronization signals or PBCHs having a QCL relationship in multiple periods to improve the robustness of SSB detection. After detecting the SSB, the terminal device can obtain time and frequency synchronization, radio frame timing, and a cell ID (Identifier). The network device configures a Type0-PDCCH CSS (Type0-Physical Downlink Control Channel Common Search Space) set through the MIB (Master Information Block) information in the SSB. The PDCCH transmitted in this Type0-PDCCH CSS set is used to schedule the PDSCH (Physical Downlink Shared Channel) carrying SIB1 (System Information Block 1). The terminal device can monitor PDCCH candidates at the monitoring occasions of the corresponding Type0-PDCCH CSS set to receive the scheduling of the corresponding SIB1 message. Similarly, the terminal device can also receive the SIB1 message by combining.

The terminal device can also obtain resource configuration in the random access procedure according to the received system message of the cell. The random access procedure is a very important process in the initial access procedure. In addition to functions such as establishing an RRC connection, maintaining uplink synchronization, and cell handover, the random access procedure also undertakes functions such as beam management and system message request.

The resource configuration in the random access procedure includes PRACH (Physical Random Access Channel) resource configuration, also known as RO (PRACH Occasion). RO is the time-frequency resource carrying the random access preamble sequence (Preamble). If two-step RACH (Random Access Channel) transmission is supported, the resource configuration in the random access procedure also includes PUSCH (Physical Uplink Shared Channel) resource configuration, also known as PUSCH transmission opportunity (PUSCH Occasion, PO). Among them, message A (MsgA) in the two-step RACH includes MsgA Preamble and MsgA PUSCH. RO is the time-frequency resource for carrying MsgA Preamble, and PO is the time-frequency resource for carrying MsgA PUSCH.

A characteristic of the NR system is that it supports downlink multi-beam. Before the network device communicates with the terminal device, the network device needs to know the beam where the terminal device is located so as to set an appropriate beam direction in subsequent data transmission. Since the PRACH in the random access procedure is the first information sent by the terminal device to the network device, the function of reporting the beam where the terminal device is located can be carried by the PRACH. Specifically, it can be determined by the mapping relationship between the SSB and the RO. When the terminal device determines a target SSB, it can transmit the PRACH according to the RO associated with the target SSB. The association relationship between the RO and the SSB is as follows:
One RO is associated with N SSBs, and each SSB corresponds to R PRACH sequences for contention-based RACH transmission.
When N < 1, one SSB can be associated with (1/N) ROs.
When N = 1, one SSB can be associated with 1 RO.
When N > 1, multiple SSBs can be associated with 1 RO, where the maximum value of R for each SSB is (64/N).

The PRACH sequences corresponding to each SSB can be divided into group A and group B.

The total PRACH sequences for contention-based RACH transmission include N*R.

The association order of the association relationship between the RO and the SSB is as follows:
During association, first sequences, then frequency domain ROs that are FDM (Frequency Division Multiplexing) in the same time unit are arranged in order, then different time domain ROs in the same time slot are arranged in order, then ROs in different time slots are arranged in order.

For the case indicated by PDCCH order (Physical Downlink Control Channel order), the PRACH sequence ID (Identifier) is indicated, and the PRACH opportunity is indicated by a mask ID. The association order is: first, frequency domain ROs that are FDM in the same time unit are arranged in order, then different time domain ROs in the same time slot are arranged in order, then ROs in different time slots are arranged in order.

The association relationship between the RO and the SSB is repeated periodically. The association period is determined according to the PRACH configuration period. One association period includes at least one instance of the association relationship between N SSB indices and their corresponding ROs. Within one association period, the association relationship between the N SSB indices and their corresponding ROs appears cyclically an integer number of times. After the integer number of mappings, if there are remaining ROs or PRACH sequences not mapped to SSB indices, these ROs or PRACH sequences are not associated with SSB indices. One association pattern period includes one or more association periods, where one association pattern period is 160 ms, that is, the association relationship between the RO and the SSB repeats periodically for up to 160 ms.

### 2. Measurement Mechanism in NR System

In the NR system, to ensure the service quality and mobility connectivity of the terminal device, the terminal device needs to perform RLM (Radio Link Monitoring), RRM (Radio Link Monitoring) measurement, and BFR (Beam Failure Recovery) mechanisms.

### RRM Measurement

For wireless mobile communication systems, accurate measurement of cell quality and beam quality is the basis for effectively performing radio resource management and mobility management. Configurable measurement reference signals include two types: CSI-RS (Channel State Information-Reference Signal) and SSB.

For SSB-based measurement, the network device configures SSB measurement resources to the UE through high-layer signaling for the UE to perform corresponding measurement operations. For CSI-RS-based measurement, the network device can configure one or more CSI-RS resources for the UE to perform measurements through high-layer signaling.

After having the above configuration parameters, the UE knows on which time domain and frequency domain resources, and for which reference signals, it should perform the corresponding measurement operations. The intra-frequency or inter-frequency measurement of the terminal device needs to obtain sufficient reference signal samples within a unit measurement time to meet certain measurement accuracy requirements (such as RSRP (Reference Signal Received Power), RSRQ (Reference Signal Receiving Quality), and SINR (Signal To Interference Plus Noise Ratio)), and after evaluating the relevant measurement results, report them to the network.

In Conditional Handover, the network side pre-configures candidate target cells and handover command information to the terminal device in advance. When specific conditions are met, the terminal device can autonomously execute the configuration in the handover command and directly initiate handover access to the target cell that meets the conditions. Since measurement reporting is no longer triggered when the handover condition is met, and the terminal device has obtained the configuration in the handover command in advance, it avoids the situation where measurement reporting or the handover command may not be correctly received during the handover process, thereby improving the handover success rate.

To improve service performance in MR-DC (Multi-Radio-DC) mode, the function of quickly establishing an SCell/SCG is supported, allowing the terminal device to perform measurements in the idle state or inactive state, and immediately report the measurement results to the network side after entering the RRC (Radio Resource Control) connected state, so that the network side can quickly configure and establish the SCell/SCG (Secondary Cell/Secondary Cell Group).

In the SCell Dormancy topic, when the SCell/SCG is activated but there is no data transmission, a dedicated Dormant BWP (Dormant Bandwidth Part) is configured through RRC, that is, the UE does not monitor PDCCH on this BWP, but only performs CSI measurement and reporting, facilitating UE power saving. When there is data transmission, it can be quickly switched to the active state through dynamic indication to quickly resume services.

### BFR Mechanism

In the NR system, cell coverage can be achieved through analog beamforming technology. To improve the robustness of analog beam transmission, when it is found that the current beam transmission quality is poor to a certain extent, the terminal device actively searches for a new beam with good link quality and notifies the network, thereby re-establishing a high-quality and reliable communication link through the new beam. This processing method is called the BFR mechanism, and is also called beam recovery mechanism.

The beam failure recovery mechanism mainly includes 4 steps:

### BFD (Beam Failure Detection)

Only single-port periodic CSI-RS can be used for beam failure detection. Specifically, the network can directly explicitly configure periodic CSI-RS for beam failure detection through signaling; or if the network does not use explicit configuration, the terminal uses the periodic CSI-RS in the activated TCI-state state of the CORESET corresponding to the PDCCH channel for beam failure detection.

### NBI (New Beam Identification)

The network pre-configures a set of candidate beams (e.g., CSI-RS and/or SSB) for the terminal. The terminal measures this set of candidate beams and selects a beam that meets a certain threshold as the new beam.

### BFRQ (Beam Failure Recovery Request)

For the primary cell (PCell) and the primary secondary cell (PSCell), the terminal initiates the beam failure recovery request BFRQ procedure through PRACH to notify the network that a beam failure has occurred and report the new beam. Specifically, the network pre-configures a set of candidate beams (e.g., CSI-RS signals and/or SSB) for the terminal and configures corresponding PRACH resources and random access preamble codes for each SSB/CSI-RS. Then, when the terminal determines a certain beam as the new beam, it uses the PRACH resource corresponding to the new beam to send the corresponding random access preamble code. After receiving it, the network knows that a beam failure has occurred at the terminal.

For a secondary cell (SCell), the BFR MAC CE report can be transmitted through the PUSCH in the primary cell or through the PUSCH in the secondary cell. If there are not enough uplink resources to send the BFR MAC CE (BFR MAC Control Element), the terminal can request uplink resources to send the BFR MAC CE by sending an SR (Selective Repeat).

### Network Side Response

For the primary cell (PCell) and the primary secondary cell (PSCell), if the terminal detects DCI (Downlink Control Information) sent to it on the new beam within the random access response window, it is considered that the beam recovery is successful; if the terminal does not detect DCI sent to it on the new beam within the random access response window, it can resend the BFRQ. This process can be repeated until the beam recovery procedure is successful, or the number of retransmissions of BFRQ exceeds the threshold specified by the network.

For a secondary cell (SCell), whether the network correctly receives the MAC CE signaling can be determined through the existing HARQ (Hybrid Automatic Repeat Request) related mechanism of PUSCH. If the terminal receives an uplink grant for scheduling new data corresponding to the same HARQ process, it is considered that the previous transmission has been correctly received by the network.

### 3. Frequency Hopping Transmission in NTN System

In the NTN system, when a satellite provides services to the ground, the area covered by the communication service is very large. Considering that the total transmit power of the satellite is limited, in order for the terminal device on the ground to normally access the satellite network, it is necessary to meet the SNR (Signal to Noise Ratio) required by different downlink channels. Assuming a system bandwidth of 30 MHz and a total satellite transmit power of 18.8 dBW, under the condition of meeting the SNR required by different downlink channels, the satellite can have up to 24 groups of active satellite antenna beams at each moment, where each group of satellite antenna beams corresponds to a coverage area with a diameter of 50 km. That is to say, in order to use 24 groups of active satellite antenna beams to achieve the coverage of one satellite, analog beamforming technology can be used, that is, the phase on the channel corresponding to each antenna is changed through a phase shifter, so that a group of antennas can form beams in different directions, thereby achieving satellite coverage through beam sweeping, that is, using beams corresponding to different directions at different times to cover different areas in the satellite coverage area. Based on the above assumptions, Table 1 gives the satellite coverage information under different minimum UE elevation angles.

**Table 1: Satellite Coverage Information**

| Minimum UE elevation angle (degrees) | The number of satellite antenna beams needed in the satellite coverage area | Number of satellites needed to complete global coverage | Number of moments that need satellite antenna beam scanning |
|---|---|---|---|
| 30 | 1143 | 462 | 48 |
| 40 | 610 | 855 | 26 |
| 50 | 321 | 1568 | 14 |
| 60 | 156 | 3306 | 7 |

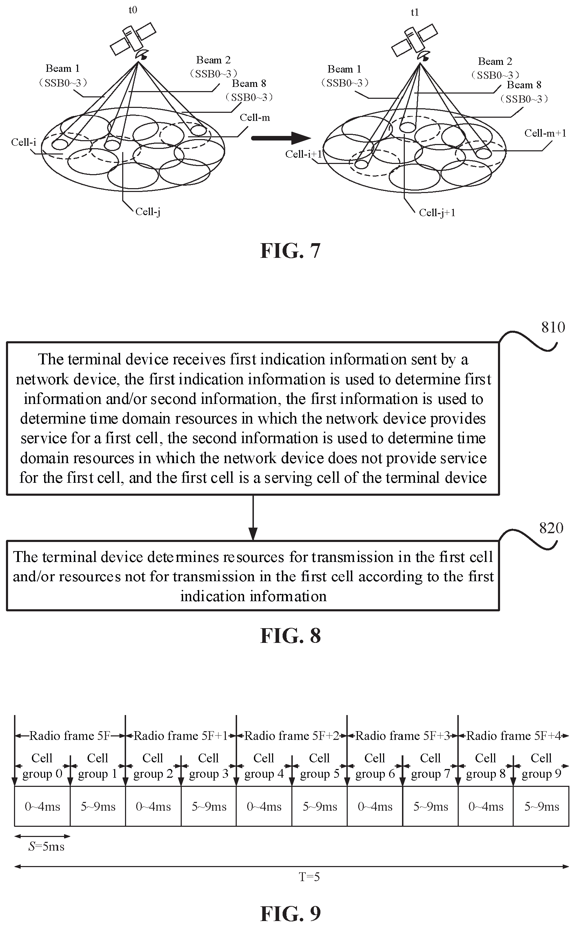

In the embodiments of the present disclosure, the above method of achieving satellite coverage through beam sweeping may also be referred to as discontinuous communication transmission. FIG. 7 shows a schematic diagram of this discontinuous communication transmission scenario. As shown in FIG. 7, different areas in the satellite coverage area are associated with different cells, or different areas in the satellite coverage area are associated with different cell groups. The satellite can have up to M groups of active satellite antenna beams at each moment, where each group of satellite antenna beams corresponds to the coverage of one cell. Each moment of the satellite corresponds to the coverage of one cell group, and each cell group includes M cells. At time t0, the M groups of satellite antenna beams serve the first cell group (cell-i, cell-j, ..., cell-m); at time t1, the M groups of satellite antenna beams switch to serve the second cell group (cell-i+1, cell-j+1, ..., cell-m+1); ..., and so on, until the satellite coverage is achieved. The service time of each cell is the time length between two adjacent moments. For example, the service time of the cells in the first cell group is the time length from time T0 to time T1.

In the discontinuous communication transmission scenario of the NTN system, the satellite implements cell coverage through beam sweeping. For each cell, the time during which it is served is discontinuous. In this scenario, how to enhance the discontinuous communication transmission system to improve the accuracy of signal transmission and avoid meaningless power consumption is currently unclear.

The embodiments of the present disclosure provide a wireless communication method. It is assumed that the satellite can have up to M groups of active satellite antenna beams in each time period, and each group of satellite antenna beams corresponds to the coverage of one cell, that is, each time period of the satellite corresponds to the coverage of one cell group, and each cell group includes M cells. To achieve satellite coverage, the number of time periods required for satellite antenna beam sweeping is N, that is, the satellite needs to serve N cell groups through beam sweeping. The satellite coverage area includes a total of M*N cells. The service time of each cell is the time length between two adjacent moments. For example, the service time of the cells in the n-th cell group is the time length from time Tn to time Tn+1, n = 0, 1, ..., N-1.

Since the network device provides discontinuous communication transmission through satellite antenna beam sweeping, the time during which each cell can be served can be planned in advance. In this case, the network device can inform the terminal device of this information, so that the terminal device can switch on the radio frequency for uplink and downlink communication during the time period when the network device provides service for the cell where the terminal device is located, and switch off the radio frequency to stop uplink and downlink communication during the time period when the network device does not plan to provide service for the cell where the terminal device is located, thereby improving the accuracy of communication transmission. Moreover, meaningless power consumption can be avoided, achieving the purpose of power saving for the terminal device.

Reference is made to FIG. 8, which shows a flowchart of a wireless communication method according to an embodiment of the present disclosure. The method can be applied to the network architectures shown in FIGS. 1 to 6. The method includes at least one of the following steps 810 to 820.

Step 810: A terminal device receives first indication information sent by a network device. The first indication information is used to determine first information and/or second information. The first information is used to determine a time domain resource in which the network device provides service for a first cell. The second information is used to determine a time domain resource in which the network device does not provide service for the first cell. The first cell is a serving cell of the terminal device.

Correspondingly, the network device sends the first indication information to the terminal device.

In some embodiments, the first information may also be first time information, and the second information may be second time information.

### I. The first indication information is used to determine the first information.

In some embodiments, the first indication information being used to determine the first information may include the following two situations:
First situation: The first indication information is used to indicate the first information.
Second situation: The first indication information is used to indicate the second information, and the terminal device determines the first information according to the second information.

In some embodiments, the first information includes at least one of: time information for providing service for the first cell, time information for providing downlink service for the first cell, or time information for providing uplink service for the first cell.

The time information for providing service for the first cell refers to information about the time period during which service is provided for the first cell. The time information for providing downlink service for the first cell refers to information about the time period dedicated to providing downlink service for the first cell. The time information for providing uplink service for the first cell refers to information about the time period dedicated to providing uplink service for the first cell.

For example, when the network uses FDD (Frequency Division Duplexing) spectrum, the first information includes time information for providing downlink service for the first cell and/or time information for providing uplink service for the first cell; when the network uses TDD (Time Division Duplexing) spectrum, the first information includes time information for providing service for the first cell.

In some embodiments, the time information for providing service for the first cell includes at least one of: a start time for providing service for the first cell, a time length for providing service for the first cell, or an end time for providing service for the first cell.

In some embodiments, the time information for providing downlink service for the first cell includes at least one of: a start time for providing downlink service for the first cell, a time length for providing downlink service for the first cell, or an end time for providing downlink service for the first cell.

In some embodiments, the time information for providing uplink service for the first cell includes at least one of: a start time for providing uplink service for the first cell, a time length for providing uplink service for the first cell, or an end time for providing uplink service for the first cell.

### II. The first indication information is used to determine the second information.

In some embodiments, the first indication information being used to determine the second information may include the following two situations:
First situation: The first indication information is used to indicate the second information.
Second situation: The first indication information is used to indicate the first information, and the terminal device determines the second information according to the first information.

In some embodiments, the second information includes at least one of: time information for not providing service for the first cell, time information for not providing downlink service for the first cell, or time information for not providing uplink service for the first cell.

The time information for not providing service for the first cell refers to information about the time period during which service is not provided for the first cell. The time information for not providing downlink service for the first cell refers to information about the time period during which downlink service is not provided for the first cell. The time information for not providing uplink service for the first cell refers to information about the time period during which uplink service is not provided for the first cell.

For example, when the network uses FDD spectrum, the second information includes time information for not providing downlink service for the first cell and/or time information for not providing uplink service for the first cell; when the network uses TDD spectrum, the first information includes time information for not providing service for the first cell.

In some embodiments, the time information for not providing service for the first cell includes at least one of: a start time for not providing service for the first cell, a time length for not providing service for the first cell, or an end time for not providing service for the first cell.

In some embodiments, the time information for not providing downlink service for the first cell includes at least one of: a start time for not providing downlink service for the first cell, a time length for not providing downlink service for the first cell, or an end time for not providing downlink service for the first cell.

In some embodiments, the time information for not providing uplink service for the first cell includes at least one of: a start time for not providing uplink service for the first cell, a time length for not providing uplink service for the first cell, or an end time for not providing uplink service for the first cell.

In some embodiments, the first indication information is further used to determine a frequency domain resource for which the network device provides service for the first cell. For example, the first indication information is further used to indicate bandwidth part (BWP) information associated with the first cell.

In some embodiments, the first indication information is carried in at least one of: DCI, RRC information, MAC CE, or system message.

In some embodiments, the first indication information is used to determine at least one of: an association relationship between at least one cell group and service time of the at least one cell group, a number of cell groups, a service time length of at least one cell group, a service time period length, a start position of service time of at least one cell group, a cell group number where the first cell is located, or a service configuration of the first cell.

As shown in FIG. 7, different areas in the satellite coverage area are associated with different cells, or different areas in the satellite coverage area are associated with different cell groups. The satellite can have up to M groups of active satellite antenna beams in each time period, where each group of satellite antenna beams corresponds to the coverage of one cell. Each time period of the satellite corresponds to the coverage of one cell group, and each cell group includes M cells. The at least one cell group mentioned above is the cell group associated with each area in the satellite coverage area.

In some embodiments, the first indication information is used to indicate at least one of: an association relationship between at least one cell group and service time of the at least one cell group, a number of cell groups, a service time length of at least one cell group, a service time period length, a start position of service time of at least one cell group, a cell group number where the first cell is located, or a service configuration of the first cell.

In some embodiments, the at least one cell group includes the cell group where the first cell is located.

In some embodiments, the service time length of the at least one cell group includes at least one of the following cases: a service time length of the 0-th cell group, a service time length of the (N-1)-th cell group, or a service time length of each cell group. Here, N is the number of cell groups, and N is a positive integer. The 0-th cell group refers to the cell group numbered 0, and the (N-1)-th cell group refers to the cell group numbered N-1, which is the last cell group.

In some embodiments, which of the above three cases is included in the service time length of the at least one cell group can be determined according to the service time length of each cell group. For example, if the service time length of each cell group is the same, only the service time length of one of the cell groups may be indicated. For another example, if the service time length of each cell group is different, the service time length of each cell group may be indicated. For another example, if only one cell group has a service time length different from other cell groups, the service time length of that cell group and the service time length of other cell groups may be indicated. In some embodiments, how to indicate the service time length of the at least one cell group may be determined by referring to the method for determining the service time length of each cell group in the following embodiments.

In some embodiments, the service configuration of the first cell includes discontinuous service and continuous service. Here, discontinuous service is also called frequency hopping transmission. The service configuration of the first cell may include whether frequency hopping transmission is configured for the first cell.

In some embodiments, at least one of the following is predefined: a number of cell groups, a service time length of at least one cell group, a service time period length, a start position of service time of at least one cell group, a cell group number where the first cell is located, or a service configuration of the first cell.

In some embodiments, if the first indication information indicates one piece of information in the above content, that piece of information does not need to be predefined; correspondingly, if one piece of information in the above content is predefined, the first indication information does not need to indicate that piece of information.

For example, if the first indication information is used to indicate an association relationship between at least one cell group and service time of the at least one cell group and a number of cell groups, then at least one of the following is predefined: a service time length of at least one cell group, a service time period length, a start position of service time of at least one cell group, a cell group number where the first cell is located, or a service configuration of the first cell.

For example, if the number of cell groups is predefined, the first indication information is used to indicate at least one of: an association relationship between at least one cell group and service time of the at least one cell group, a service time length of at least one cell group, a service time period length, a start position of service time of at least one cell group, a cell group number where the first cell is located, or a service configuration of the first cell.

In some embodiments, the first information and/or the second information is determined based on at least one of: an association relationship between at least one cell group and service time of the at least one cell group, a number of cell groups, a service time length of at least one cell group, a service time period length, a start position of service time of at least one cell group, a cell group number where the first cell is located, or a service configuration of the first cell. For example, the first indication information is used to determine the cell group number where the first cell is located, and the terminal device determines the first information and/or the second information according to the cell group number where the first cell is located.

Step 820: The terminal device determines, according to the first indication information, a resource for transmission in the first cell and/or a resource not for transmission in the first cell.

In some embodiments, determining, according to the first indication information, a resource for transmission in the first cell and/or a resource not for transmission in the first cell includes at least one of:
determining, according to the first indication information, a downlink resource for transmission in the first cell;
determining, according to the first indication information, a downlink resource not for transmission in the first cell;
determining, according to the first indication information, an uplink resource for transmission in the first cell; or
determining, according to the first indication information, an uplink resource not for transmission in the first cell.

In some embodiments, the terminal device determines the resource for transmission in the first cell according to the first information.

In some embodiments, the terminal device determines the resource for transmission in the first cell according to the second information.

In some embodiments, the terminal device determines an uplink resource for uplink transmission in the first cell according to the first information.

In some embodiments, the terminal device determines an uplink resource for uplink transmission in the first cell according to the second information.

In some embodiments, the terminal device determines a downlink resource for downlink transmission in the first cell according to the first information.

In some embodiments, the terminal device determines a downlink resource for downlink transmission in the first cell according to the second information.

In some embodiments, the terminal device determines a resource not for transmission in the first cell according to the first information.

In some embodiments, the terminal device determines a resource not for transmission in the first cell according to the second information.

In some embodiments, the terminal device determines an uplink resource not for uplink transmission in the first cell according to the first information.

In some embodiments, the terminal device determines an uplink resource not for uplink transmission in the first cell according to the second information.

In some embodiments, the terminal device determines a downlink resource not for downlink transmission in the first cell according to the first information.

In some embodiments, the terminal device determines a downlink resource not for downlink transmission in the first cell according to the second information.

In some embodiments, the resource for transmission in the first cell includes at least one of:
a resource in the first cell for transmitting a first downlink channel or signal; or
a resource in the first cell for transmitting a first uplink channel or signal.

In some embodiments, the first downlink channel or signal includes at least one of: SSB, CSI-RS, RLM-RS, PRS (Positioning Reference Signal), PDCCH, or PDSCH (Physical Downlink Shared Channel).

In some embodiments, the first uplink channel or signal includes at least one of: PRACH, PUSCH, PUCCH (Physical Uplink Control Channel), or SRS (Sounding Reference Signal).

In some embodiments, the method further includes at least one of:
not performing downlink reception and uplink transmission within the time length for which the network device does not provide service for the first cell;
not performing downlink reception within the time length for which the network device does not provide downlink service for the first cell;
not performing uplink transmission within the time length for which the network device does not provide uplink service for the first cell;
performing GNSS (Global Navigation Satellite System) measurement within the time length for which the network device does not provide service for the first cell;
performing GNSS measurement within the time length for which the network device does not provide downlink service for the first cell; or
performing GNSS measurement within the time length for which the network device does not provide uplink service for the first cell.

The technical solutions provided by the embodiments of the present disclosure allow the terminal device to receive indication information from the network device to obtain the time period during which the network device provides service for the terminal device, or to obtain the time period during which the network device does not provide service for the terminal device. The terminal device can switch on the radio frequency for uplink and downlink communication during the time period when the network device provides service for the cell where the terminal device is located, and switch off the radio frequency to stop uplink and downlink communication during the time period when the network device does not plan to provide service for the cell where the terminal device is located, thereby improving the accuracy of signal transmission. Moreover, meaningless power consumption is avoided, achieving the purpose of power saving for the terminal device. Additionally, the terminal device can also determine valid resources in the cell network according to the above indication information.

For how the terminal device determines the resource for transmission in the first cell, the present disclosure provides the following embodiments.
I. The first indication information is used to determine the first information, and the resource for transmission in the first cell includes a resource in the first cell for transmitting a first downlink channel or signal.

In some embodiments, the terminal device determines the resource in the first cell for transmitting the first downlink channel or signal according to an intersection between the time domain resource in which the network device provides service for the first cell and the time domain resource allocated by the network device for transmitting the first downlink channel or signal, where the time domain resource in which the network device provides service for the first cell is determined based on the first information.

In some embodiments, the terminal device determines the resource in the first cell for transmitting the first downlink channel or signal according to an intersection between the time domain resource in which the network device provides downlink service for the first cell and the time domain resource allocated by the network device for transmitting the first downlink channel or signal, where the time domain resource in which the network device provides downlink service for the first cell is determined based on the first information.

In some embodiments, the time domain resource allocated by the network device for transmitting the first downlink channel or signal may be dynamically scheduled or semi-statically configured, which is not limited in the present disclosure.

For example, the first downlink channel or signal includes PDSCH, and the PDSCH includes a DCI-dynamically scheduled PDSCH and/or a semi-statically configured PDSCH.

For example, the first downlink channel or signal includes CSI-RS, and the CSI-RS includes a DCI-dynamically scheduled CSI-RS and/or a semi-statically configured CSI-RS.

II. The first indication information is used to determine the first information, and the resource for transmission in the first cell includes a resource in the first cell for transmitting a first uplink channel or signal.

In some embodiments, the terminal device determines the resource in the first cell for transmitting the first uplink channel or signal according to an intersection between the time domain resource in which the network device provides service for the first cell and the time domain resource allocated by the network device for transmitting the first uplink channel or signal, where the time domain resource in which the network device provides service for the first cell is determined based on the first information.

In some embodiments, the terminal device determines the resource in the first cell for transmitting the first uplink channel or signal according to an intersection between the time domain resource in which the network device provides uplink service for the first cell and the time domain resource allocated by the network device for transmitting the first uplink channel or signal, where the time domain resource in which the network device provides uplink service for the first cell is determined based on the first information.

In some embodiments, the time domain resource allocated by the network device for transmitting the first uplink channel or signal may be dynamically scheduled or semi-statically configured, which is not limited in the present disclosure.

For example, the first uplink channel or signal includes PRACH, and the PRACH includes a DCI-dynamically scheduled PRACH and/or a semi-statically configured PRACH.

For example, the first uplink channel or signal includes PUSCH, and the PUSCH includes a DCI-dynamically scheduled PUSCH and/or a semi-statically configured PUSCH.

Through the above methods, the terminal device can determine the resource for transmission in the first cell according to the first indication information. The terminal device can switch on the radio frequency for uplink and downlink communication during the time period when the network device provides service for the cell where the terminal device is located, and switch off the radio frequency to stop uplink and downlink communication during the time period when the network device does not plan to provide service for the cell where the terminal device is located, thereby achieving the purpose of power saving for the terminal device. Additionally, the terminal device can also determine valid resources in the cell network according to the above indication information.

For how to determine the first information and/or the second information, the present disclosure provides the following embodiments.

In some embodiments, the first information and/or the second information is determined based on an association relationship between at least one cell group and service time of the at least one cell group.

Here, the service time length in the i-th cell group includes the time length from i*S to (i+1)*S-1.

Here, i represents the number of the cell group, i = 0, 1, ..., N-1, N represents the number of cell groups, N is a positive integer, and S represents the service time length of each cell group.

Optionally, the unit of S may be one of: radio frame, subframe, time slot, symbol, millisecond, or second.

For example, the service time length in the 1st cell group includes the time length from 1S to 2S-1. For example, if S=10ms, then the service time length in the 1st cell group includes the time length from 10ms to 19ms.

In some embodiments, the start position of the service time of the 0-th cell group is the start position of a radio frame numbered T*F, where the service time period length is T radio frames, T is a positive integer, and F is an integer.

The service time period is T consecutive radio frames starting from the radio frame numbered TF. In other words, starting from the radio frame numbered TF, every T consecutive radio frames is one service time period.

F can take values such as 0, 1, 2, ... etc.

For example, T=2, F=0, 1, 2, ... etc., then the start position of the service time of the 0-th cell group is the start position of radio frames numbered 0, 2, 4, ..., etc., i.e., 2*F. For example, T=4, F=0, 4, 8, ... etc., then the start position of the service time of the 0-th cell group is the start position of radio frames numbered 0, 4, 8, ..., etc., i.e., 4*F.

In some embodiments, the length of one radio frame is 10ms.

In some embodiments, the start position of the service time of the 0-th cell group is determined by the first indication information.

In some embodiments, the service time length S of each cell group is determined by the service time period length T and the number N of cell groups.

In some embodiments, the service time period length is T radio frames.

In some embodiments, the service time length S of each cell group is determined by the first indication information.

In some embodiments, the service time length S of each cell group is determined by the service time period length T and the number N of cell groups, including one of the following cases:
the service time length of each cell group is S = (T*10)/N;
the service time length of each cell group except the last cell group is S = ceil ((T*10)/N), and the service time length of the last cell group is (T*10)-(N-1)*S, where ceil means rounding up;
the service time length of each cell group except the last cell group is S = floor((T*10)/N), and the service time length of the last cell group is (T*10)-(N-1)*S, where floor means rounding down;
where the service time period length is T radio frames.

In some embodiments, if S calculated by S = (T*10)/N is not an integer, then the service time length of all cell groups except the last one is S, and the service time length of the last cell group is (T*10)-(N-1)*S.

For example, assume T is 5 radio frames and N is 7 cell groups. The service time length of each cell group except the last one is S = ceil ((T*10)/N) = ceil(50/7) = 8ms, and the service time length of the last cell group is (T*10)-(N-1)*S = 50-(7-1)*8 = 2ms.

For example, it is assumed that T is 5 radio frames and N is 7 cell groups. The service time length of each cell group except the last one is S = floor ((T*10)/N) = floor(50/7) = 7ms, and the service time length of the last cell group is (T*10)-(N-1)*S = 50-(7-1)*7 = 8ms.

In some embodiments, the above methods for determining the service time length S of each cell group are alternative solutions and can be used interchangeably, which is not limited in the present disclosure. Optionally, which of the above schemes is used to determine the service time length of each cell group may be configured by the network device or predefined. The present disclosure also provides exemplary descriptions for the above methods of determining the service time length S of each cell group.

For example, the first indication information is used to indicate that the start position of the service time of each cell group is i*S, where i is the number of the cell group, i = 0, 1, ..., N-1. The service time of the cells in the i-th cell group is the time length from i*S to (i+1)*S-1. Assuming the service time period length T (service time period length is T radio frames) is 4, then starting from the radio frame numbered 4*F, within every four consecutive radio frames, the terminal device can determine the start position of the service time of each cell group according to i*S, and determine the end position of the service time of each cell group according to (i+1)*S, that is, the service time of the cells in the i-th cell group is the i*S-th to (i+1)*S -1-th millisecond within every four consecutive radio frames.

For example, the first indication information is used to indicate the number N of cell groups and the service time length S of each cell group, where N and S are positive integers. Here, N=10, S=5ms, the start position of the service time of the 0-th cell group starts from the radio frame numbered 5*F, and F can take values such as 0, 1, 2, ... etc. Then the service time of the 0-th cell group is the 0th to 4th millisecond of radio frame 5*F, the service time of the 1st cell group is the 5th to 9th millisecond of radio frame 5F, the service time of the 2nd cell group is the 0th to 4th millisecond of radio frame 5F+1, ..., the service time of the 9th cell group is the 5th to 9th millisecond of radio frame 5*F+4. As shown in FIG. 9, assuming the first indication information is also used to determine that the cell group number where the first cell is located is the 2nd cell group, since the service time of the 2nd cell group is the 0th to 4th millisecond of radio frame 5*F+1, the terminal device can determine that the first information is the 0th to 4th millisecond of radio frame 5*F+1, and the second information is the 5th to 9th millisecond of radio frame 5F, the 5th to 9th millisecond of radio frame 5*F+1, and radio frames 5*F+2, 5*F+3, 5*F+4.

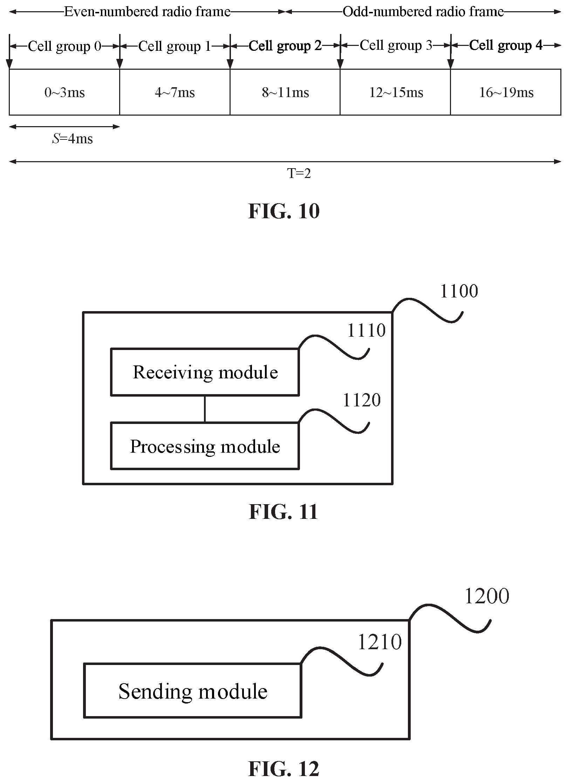

For example, the first indication information is used to indicate the number N of cell groups and the service time period length T, where N and T are positive integers, and the service time period length is T radio frames. Here, N=5, T=2, then the service time length S of each cell group is (T*10)/N=4ms. Starting from radio frames with even numbers, within every two consecutive radio frames, the terminal device can determine the start position of the service time of each cell group according to n*S, where n is the number of the cell group, n = 0, 1, ..., N-1. That is, the service time of the cells in the n-th cell group is the n*S-th to (n+1)*S-1-th millisecond within every two consecutive radio frames. As shown in FIG. 10, assuming the first indication information is also used to determine that the cell group number where the first cell is located is the 2nd cell group, the terminal device can determine according to the above information that the service time of the 2nd cell group is the 8th to 11th millisecond within every two consecutive radio frames, and then determine that the first information is the 8th to 11th millisecond within every two consecutive radio frames, and the second information is the 0th to 7th millisecond and the 12th to 19th millisecond within every two consecutive radio frames.

For example, the first indication information is used to indicate the number N of cell groups and the service time period length T, where N and T are positive integers, and the service time period length is T radio frames. Here, N=3, T=2, then the service time length S of each cell group except the last one is ceil ((T*10)/N)=7ms, and the service time length of the last cell group is (T*10)-(N-1)*S=6ms.

For example, the first indication information is used to indicate the number N of cell groups and the service time period length T, where N and T are positive integers, and the service time period length is T radio frames. Here, N=3, T=2, then the service time length S of each cell group except the last one is floor ((T*10)/N)=6ms, and the service time length of the last cell group is (T*10)-(N-1)*S=8ms.

With the above methods, the terminal device can determine the service time length of each cell group, and according to the association relationship between at least one cell group and the service times of the at least one cell group, further determine the time period during which the network device provides service for the terminal device, or the time period during which the network device does not provide service for the terminal device.

In some embodiments, the first information and/or the second information is determined based on the service configuration of the first cell.

In some embodiments, when the service configuration of the first cell is configured as discontinuous service or when the service configuration of the first cell is not configured as continuous service, the terminal device determines the first information and/or the second information.

In some embodiments, when the service configuration of the first cell is configured as continuous service or when the service configuration of the first cell is not configured as discontinuous service, the terminal device does not determine the first information and/or the second information.

In some embodiments, the terminal device determines the first information and/or the second information only when it is determined that the service configuration of the first cell is configured as discontinuous service, or when it is determined that the service configuration of the first cell is not configured as continuous service.

In some embodiments, the terminal device does not determine the first information and/or the second information when the service configuration of the first cell is configured as continuous service, or when it is determined that the service configuration of the first cell is not configured as discontinuous service.

With the above methods, the terminal device can determine whether to determine the first information and/or the second information according to the service configuration of the first cell, and then determine the time period during which the network device provides service for the terminal device, or the time period during which the network device does not provide service for the terminal device.

For the application of the technical solutions provided by the embodiments of the present disclosure in actual scenarios, the present disclosure also provides the following several embodiments.

### I. RLM Process

In some embodiments, after RLM-RS is configured and before measuring the RLM-RS, the terminal device determines valid RLM-RS resources in the first cell according to the first information (for example, determining the time length for which the network device provides service for the first cell or the time length for which the network device provides downlink service for the first cell) and the RLM-RS resources configured by the network device, and then measures the valid RLM-RS.

After RLM-RS is configured, the terminal device measures the RLM-RS, compares the measurement results with IS/OOS (In Synchronization/Out Of Synchronization) thresholds, thereby obtaining the IS/OOS state of the radio link, and periodically reports the evaluation results of the IS/OOS state to the higher layer. If the measurement result of any RLM-RS among all configured RLM-RSs is higher than the IS threshold, the physical layer reports the IS state to the higher layer; if the measurement results of all configured RLM-RSs are lower than the OOS threshold, the physical layer reports the OOS state to the higher layer.

In the related art, in non-DRX (Discontinuous Reception) state, the reporting period of the IS/OOS state is the maximum value between the shortest period among the periods of all configured RLM-RS resources and 10ms. In DRX state, the reporting period of the IS/OOS state is the maximum value between the shortest period among the periods of all configured RLM-RS resources and the DRX period.

In the case where the first downlink channel or signal includes RLM-RS, the present disclosure provides the following methods for how to determine the reporting period of the IS/OOS state:

First method: In non-DRX state, the reporting period of the IS/OOS state is the maximum value among the shortest period among the periods of all configured RLM-RS resources, 10ms, and the time length of time domain resource in which the network device provides service for the first cell once.

For example, the shortest period among the periods of all configured RLM-RS resources is 8ms, and the time length of time domain resource in which the network device provides service for the first cell once is 6ms, then the reporting period of the IS/OOS state is 10ms.

Second method: In non-DRX state, the reporting period of the IS/OOS state is the maximum value among the shortest period among the periods of all configured RLM-RS resources, 10ms, and the time length of time domain resource in which the network device provides downlink service for the first cell once.

For example, the shortest period among the periods of all configured RLM-RS resources is 8ms, and the time length of time domain resource in which the network device provides downlink service for the first cell once is 6ms, then the reporting period of the IS/OOS state is 10ms.

Third method: In DRX state, the reporting period of the IS/OOS state is the maximum value among the shortest period among the periods of all configured RLM-RS resources, the DRX period, and the time length of time domain resource in which the network device provides service for the first cell once.

For example, the shortest period among the periods of all configured RLM-RS resources is 8ms, the DRX period is 5ms, and the time length of time domain resource in which the network device provides service for the first cell once is 6ms, then the reporting period of the IS/OOS state is 8ms.

Fourth method: In DRX state, the reporting period of the IS/OOS state is the maximum value among the shortest period among the periods of all configured RLM-RS resources, the DRX period, and the time length of time domain resource in which the network device provides downlink service for the first cell once.

For example, the shortest period among the periods of all configured RLM-RS resources is 8ms, the DRX period is 5ms, and the time length of time domain resource in which the network device provides downlink service for the first cell once is 6ms, then the reporting period of the IS/OOS state is 8ms.

### II. RO Resource Determination

In some embodiments, the first uplink channel or signal includes PRACH, and the RO resource corresponding to the PRACH is determined according to the mapping relationship between RO resources and SSB indices. The mapping relationship between RO resources and SSB indices is determined based on one of:
within one association period, first determine valid RO resources in the first cell according to the first indication information and the RO resources configured by the network device, and then perform mapping according to the association relationship between the valid RO resources and SSB indices;
within one association pattern period, first determine valid RO resources in the first cell according to the first indication information and the RO resources configured by the network device, and then perform mapping according to the association relationship between the valid RO resources and SSB indices;
within the time length of time domain resource in which the network device provides service for the first cell once, first determine RO resources in the first cell according to the RO resources configured by the network device, and then perform mapping according to the association relationship between the RO resources and SSB indices;
within the time length of time domain resource in which the network device provides uplink service for the first cell once, first determine RO resources in the first cell according to the RO resources configured by the network device, and then perform mapping according to the association relationship between the RO resources and SSB indices.

By way of example and not limitation, the terminal device determines the association relationship between RO and SSB according to at least one of the following ways:
First Method: Within one association period, determine valid RO resources in the first cell according to the first information (for example, determining the time length for which the network device provides service for the first cell or the time length for which the network device provides uplink service for the first cell) and the PRACH resources configured by the network device, and then perform mapping according to the association relationship between the RO and M SSB indices. Here, M is a positive integer.

In some embodiments, within one association period, the association relationship between the SSB and its corresponding RO appears cyclically an integer number of times.

In some embodiments, within one association period, all valid RO resources are associated with their corresponding SSBs.

In some embodiments, if there are no valid RO resources within one association period, no mapping between RO and M SSB indices is performed within that association period.

In some embodiments, if the valid RO resources included within one association period do not satisfy the condition for at least one instance of the association relationship between M SSB indices and their corresponding ROs, no mapping between RO and M SSB indices is performed within that association period.

Second method: Within one association pattern period, determine valid RO resources in the first cell according to the first information (for example, determining the time length for which the network device provides service for the first cell or the time length for which the network device provides uplink service for the first cell) and the PRACH resources configured by the network device, and then perform mapping according to the association relationship between the RO and M SSB indices.

One association pattern period includes one or more association periods, where one association pattern period is 160 ms, that is, the association relationship between RO and SSB repeats periodically for up to 160 ms.

In some embodiments, within one association pattern period, the association relationship between the SSB and its corresponding RO appears cyclically an integer number of times.

In some embodiments, within one association pattern period, all valid RO resources are associated with their corresponding SSBs.

In some embodiments, if there are no valid RO resources within one association pattern period, no mapping between RO and M SSB indices is performed within that association pattern period.

In some embodiments, if the valid RO resources included within one association pattern period do not satisfy the condition for at least one instance of the association relationship between M SSB indices and their corresponding ROs, no mapping between RO and M SSB indices is performed within that association pattern period.

Third method: Within the time length of one instance of the network device providing service for the first cell, determine valid RO resources in the first cell according to the PRACH resources configured by the network device, and then perform mapping according to the association relationship between the RO and N SSB indices.

In some embodiments, within the time length of one instance of the network device providing service for the first cell, the association relationship between the SSB and its corresponding RO appears cyclically an integer number of times.

In some embodiments, within the time length of one instance of the network device providing service for the first cell, all valid RO resources are associated with their corresponding SSBs.

In some embodiments, if there are no valid RO resources within the time length of one instance of the network device providing service for the first cell, no mapping between RO and M SSB indices is performed within that time length.

In some embodiments, if the valid RO resources included within the time length of one instance of the network device providing service for the first cell do not satisfy the condition for at least one instance of the association relationship between M SSB indices and their corresponding ROs, no mapping between RO and M SSB indices is performed within that time length.

In some embodiments, if one association pattern period is greater than the time length of one instance of the network device providing service for the first cell, then within one association pattern period, the association relationship between RO and SSB repeats periodically.

In some embodiments, if the time length of one instance of the network device providing service for the first cell is greater than one association pattern period, then within the time length of one instance of the network device providing service for the first cell, the association relationship between RO and SSB repeats periodically.

Fourth method: Within the time length of one instance of the network device providing uplink service for the first cell, determine valid RO resources in the first cell according to the PRACH resources configured by the network device, and then perform mapping according to the association relationship between the RO and M SSB indices.

In some embodiments, within the time length of one instance of the network device providing uplink service for the first cell, the association relationship between the SSB and its corresponding RO appears cyclically an integer number of times.

In some embodiments, within the time length of one instance of the network device providing uplink service for the first cell, all valid RO resources are associated with their corresponding SSBs.

In some embodiments, if there are no valid RO resources within the time length of one instance of the network device providing uplink service for the first cell, no mapping between RO and M SSB indices is performed within that time length.

In some embodiments, if the valid RO resources included within the time length of one instance of the network device providing uplink service for the first cell do not satisfy the condition for at least one instance of the association relationship between M SSB indices and their corresponding ROs, no mapping between RO and M SSB indices is performed within that time length.

In some embodiments, if one association pattern period is greater than the time length of one instance of the network device providing uplink service for the first cell, then within one association pattern period, the association relationship between RO and SSB repeats periodically.

In some embodiments, if the time length of one instance of the network device providing uplink service for the first cell is greater than one association pattern period, then within the time length of one instance of the network device providing uplink service for the first cell, the association relationship between RO and SSB repeats periodically.

### III. RRM Measurement

In some embodiments, before performing RRM measurement (such as RSRP, RSRQ, or SINR measurement), the terminal device determines valid CSI-RS resources or SSB resources in the first cell according to the first information (for example, determining the time length for which the network device provides service for the first cell or the time length for which the network device provides downlink service for the first cell) and the CSI-RS resources or SSB resources configured by the network device, and then measures the valid CSI-RS resources or SSB resources.

In some embodiments, in conditional handover, when specific conditions are met, the terminal device determines valid reference signal resources in the first cell according to the first information (for example, determining the time length for which the network device provides service for the first cell or the time length for which the network device provides downlink service for the first cell) and the reference signal resources pre-configured by the network device through the handover command information, and autonomously executes the configuration in the handover command to directly initiate handover access to the target cell that meets the conditions.

In some embodiments, the terminal device, in the idle state or inactive state, determines valid reference signal resources, such as SSB resources, in the first cell according to the first information (for example, determining the time length for which the network device provides service for the first cell or the time length for which the network device provides downlink service for the first cell), and performs measurements. After entering the RRC connected state, it immediately reports the measurement results to the network side, so that the network side can quickly configure and establish an SCell/SCG. In some embodiments, in this case, the first indication information is carried in system message.

In some embodiments, when a dedicated Dormant BWP (dormant BWP) is configured on the first cell through RRC, the terminal device determines valid reference signal resources, such as CSI-RS resources, in the first cell according to the first information (for example, determining the time length for which the network device provides service for the first cell or the time length for which the network device provides downlink service for the first cell), and performs CSI measurement and reporting.

### IV. BFR Mechanism

In some embodiments, in the BFD process, the terminal device determines valid CSI-RS resources according to the first information (for example, determining the time length for which the network device provides service for the first cell or the time length for which the network device provides downlink service for the first cell) and the periodic CSI-RS resource configuration for BFD, and performs beam failure detection according to these valid CSI-RS resources.

In some embodiments, in the NBI process, the terminal device determines valid CSI-RS and/or SSB resources according to the first information (for example, determining the time length for which the network device provides service for the first cell or the time length for which the network device provides downlink service for the first cell) and a set of candidate beams (e.g., CSI-RS and/or SSB) pre-configured by the network device, and measures these valid CSI-RS and/or SSB resources to select a beam that meets a certain threshold as the new beam.

In some embodiments, in the BFRQ process, for the primary cell (PCell) and the primary secondary cell (PSCell), the terminal device determines valid RO resources to initiate BFRQ according to the first information (for example, determining the time length for which the network device provides service for the first cell or the time length for which the network device provides uplink service for the first cell).

In some embodiments, in the BFRQ process, for a secondary cell (SCell), the terminal device determines valid uplink resources (e.g., PUSCH or SR) to send the BFR MAC CE according to the first information (for example, determining the time length for which the network device provides service for the first cell or the time length for which the network device provides uplink service for the first cell).

In some embodiments, in the network side response process, the terminal device determines a valid random access response window according to the first information (for example, determining the time length for which the network device provides service for the first cell or the time length for which the network device provides downlink service for the first cell), and monitors the network side response within this valid random access response window.

In some embodiments, the first downlink channel or signal includes PDCCH, and the PDSCH scheduled by the PDCCH is used to carry RAR (Random Access Response). The method further includes:
monitoring the PDCCH within a valid RAR window, where the valid RAR window is determined according to the time domain resource in which the network device provides service for the first cell or the time domain resource in which the network device provides downlink service for the first cell.

It should be noted that in the above method embodiments, the technical solutions of the present disclosure are mainly introduced and explained from the perspective of interaction between the terminal device and the network device. The steps performed by the terminal device described above can be implemented separately as a wireless communication method on the terminal device side; the steps performed by the network device described above can be implemented separately as a wireless communication method on the network device side.

The following are apparatus embodiments of the present disclosure, which can be used to execute the method embodiments of the present disclosure. For details not disclosed in the device embodiments of the present disclosure, reference is made to the method embodiments of the present disclosure.

Reference is made to FIG. 11, which shows a block diagram of a device for wireless communication according to an embodiment of the present disclosure. The device has the function of implementing the wireless communication method on the terminal device side described above. The function can be implemented by hardware, or by hardware executing corresponding software. The device may be the terminal device described above, or may be provided in the terminal device. As shown in FIG. 11, the device 1100 may include: a receiving module 1110 and a processing module 1120.

The receiving module 1110 is configured to receive first indication information sent by a network device. The first indication information is used to determine first information and/or second information. The first information is used to determine a time domain resource in which the network device provides service for a first cell. The second information is used to determine a time domain resource in which the network device does not provide service for the first cell. The first cell is a serving cell of the terminal device.

The processing module 1120 is configured to determine, according to the first indication information, a resource for transmission in the first cell and/or a resource not for transmission in the first cell.

In some embodiments, the first information includes at least one of: time information for providing service for the first cell, time information for providing downlink service for the first cell, or time information for providing uplink service for the first cell.

In some embodiments, the first indication information being used to determine the first information includes:
the first indication information is used to indicate the first information; or
the first indication information is used to indicate the second information, and the terminal device determines the first information according to the second information.

In some embodiments, the second information includes at least one of: time information for not providing service for the first cell, time information for not providing downlink service for the first cell, or time information for not providing uplink service for the first cell.

In some embodiments, the first indication information being used to determine the second information includes:
the first indication information is used to indicate the second information; or
the first indication information is used to indicate the first information, and the terminal device determines the second information according to the first information.

In some embodiments, the processing module 1120 is configured to perform at least one of:
determining, according to the first indication information, a downlink resource for transmission in the first cell;
determining, according to the first indication information, a downlink resource not for transmission in the first cell;
determining, according to the first indication information, an uplink resource for transmission in the first cell; or
determining, according to the first indication information, an uplink resource not for transmission in the first cell.

In some embodiments, the first indication information is carried in at least one of: DCI, RRC information, MAC CE, or system message.

In some embodiments, the first indication information being used to determine the first information and/or the second information includes:

the first indication information is used to determine at least one of: an association relationship between at least one cell group and service time of the at least one cell group, a number of cell groups, a service time length of at least one cell group, a service time period length, a start position of service time of at least one cell group, a cell group number where the first cell is located, or a service configuration of the first cell.

In some embodiments, the first information and/or the second information is determined based on at least one of: an association relationship between at least one cell group and service time of the at least one cell group, a number of cell groups, a service time length of at least one cell group, a service time period length, a start position of service time of at least one cell group, a cell group number where the first cell is located, or a service configuration of the first cell.

In some embodiments, the first information and/or the second information is determined based on an association relationship between at least one cell group and service time of the at least one cell group.

Here, the service time length in the i-th cell group includes the time length from i*S to (i+1)*S-1.

Here, i represents the number of the cell group, i = 0, 1, ..., N-1, N represents the number of cell groups, N is a positive integer, and S represents the service time length of each cell group.

In some embodiments, the start position of the service time of the 0-th cell group is the start position of a radio frame numbered T*F, where the service time period length is T radio frames, T is a positive integer, and F is an integer; or
the start position of the service time of the 0-th cell group is determined by the first indication information.

In some embodiments, the service time length S of each cell group is determined by the service time period length T and the number N of cell groups; or
the service time length S of each cell group is determined by the first indication information.

In some embodiments, the service time length S of each cell group is determined by the service time period length T and the number N of cell groups, including one of the following cases:
the service time length of each cell group is S = (T*10)/N;
the service time length of each cell group except the last cell group is S = ceil ((T*10)/N), and the service time length of the last cell group is (T*10)-(N-1)*S, where ceil means rounding up;
the service time length of each cell group except the last cell group is S = floor((T*10)/N), and the service time length of the last cell group is (T*10)-(N-1)*S, where floor means rounding down;
where the service time period length is T radio frames.

In some embodiments, the first information and/or the second information is determined based on the service configuration of the first cell, where,
when the service configuration of the first cell is configured as discontinuous service or when the service configuration of the first cell is not configured as continuous service, the terminal device determines the first information and/or the second information; or
when the service configuration of the first cell is configured as continuous service or when the service configuration of the first cell is not configured as discontinuous service, the terminal device does not determine the first information and/or the second information.

In some embodiments, the resource for transmission in the first cell includes at least one of:
a resource in the first cell for transmitting a first downlink channel or signal; or
a resource in the first cell for transmitting a first uplink channel or signal.

In some embodiments, the first indication information is used to determine the first information, and the resource for transmission in the first cell includes a resource in the first cell for transmitting a first downlink channel or signal.

The processing module 1120 is configured to determine the resource in the first cell for transmitting the first downlink channel or signal according to an intersection between the time domain resource in which the network device provides service for the first cell and the time domain resource allocated by the network device for transmitting the first downlink channel or signal, where the time domain resource in which the network device provides service for the first cell is determined based on the first information.

Alternatively, the processing module 1120 is configured to determine the resource in the first cell for transmitting the first downlink channel or signal according to an intersection between the time domain resource in which the network device provides downlink service for the first cell and the time domain resource allocated by the network device for transmitting the first downlink channel or signal, where the time domain resource in which the network device provides downlink service for the first cell is determined based on the first information.

In some embodiments, the first indication information is used to determine the first information, and the resource for transmission in the first cell includes a resource in the first cell for transmitting a first uplink channel or signal.

The processing module 1120 is configured to determine the resource in the first cell for transmitting the first uplink channel or signal according to an intersection between the time domain resource in which the network device provides service for the first cell and the time domain resource allocated by the network device for transmitting the first uplink channel or signal, where the time domain resource in which the network device provides service for the first cell is determined based on the first information.

Alternatively, the processing module 1120 is configured to determine the resource in the first cell for transmitting the first uplink channel or signal according to an intersection between the time domain resource in which the network device provides uplink service for the first cell and the time domain resource allocated by the network device for transmitting the first uplink channel or signal, where the time domain resource in which the network device provides uplink service for the first cell is determined based on the first information.

In some embodiments, the first downlink channel or signal includes at least one of: SSB, CSI-RS, RLM-RS, PRS, PDCCH, PDSCH; and/or, the first uplink channel or signal includes at least one of: PRACH, PUSCH, PUCCH, or SRS.

In some embodiments, the first downlink channel or signal includes RLM-RS, and the reporting period of the IS/OOS state includes at least one of the following cases:
in non-DRX state, the reporting period of the IS/OOS state is the maximum value among the shortest period among the periods of all configured RLM-RS resources, 10ms, and the time length of time domain resource in which the network device provides service for the first cell once;
in non-DRX state, the reporting period of the IS/OOS state is the maximum value among the shortest period among the periods of all configured RLM-RS resources, 10ms, and the time length of time domain resource in which the network device provides downlink service for the first cell once;
in DRX state, the reporting period of the IS/OOS state is the maximum value among the shortest period among the periods of all configured RLM-RS resources, the DRX period, and the time length of time domain resource in which the network device provides service for the first cell once; or
in DRX state, the reporting period of the IS/OOS state is the maximum value among the shortest period among the periods of all configured RLM-RS resources, the DRX period, and the time length of time domain resource in which the network device provides downlink service for the first cell once.

In some embodiments, the first downlink channel or signal includes PDCCH, and the PDSCH scheduled by the PDCCH is used to carry RAR. The processing module 1120 is further configured to monitor the PDCCH within a valid RAR window, where the valid RAR window is determined according to the time domain resource in which the network device provides service for the first cell or the time domain resource in which the network device provides downlink service for the first cell.

In some embodiments, the first uplink channel or signal includes PRACH, and the RO resource corresponding to the PRACH is determined according to the mapping relationship between RO resources and SSB indices. The mapping relationship between RO resources and SSB indices is determined based on one of:
within one association period, first determine valid RO resources in the first cell according to the first indication information and the RO resources configured by the network device, and then perform mapping according to the association relationship between the valid RO resources and SSB indices;
within one association pattern period, first determine valid RO resources in the first cell according to the first indication information and the RO resources configured by the network device, and then perform mapping according to the association relationship between the valid RO resources and SSB indices;
within the time length of time domain resource in which the network device provides service for the first cell once, first determine RO resources in the first cell according to the RO resources configured by the network device, and then perform mapping according to the association relationship between the RO resources and SSB indices; or
within the time length of time domain resource in which the network device provides uplink service for the first cell once, first determine RO resources in the first cell according to the RO resources configured by the network device, and then perform mapping according to the association relationship between the RO resources and SSB indices.

In some embodiments, the processing module 1120 is further configured to perform at least one of:
not performing downlink reception and uplink transmission within the time length for which the network device does not provide service for the first cell;
not performing downlink reception within the time length for which the network device does not provide downlink service for the first cell;
not performing uplink transmission within the time length for which the network device does not provide uplink service for the first cell;
performing GNSS measurement within the time length for which the network device does not provide service for the first cell;
performing GNSS measurement within the time length for which the network device does not provide downlink service for the first cell; or
performing GNSS measurement within the time length for which the network device does not provide uplink service for the first cell.

The technical solutions provided by the embodiments of the present disclosure allow the terminal device to receive indication information from the network device to obtain the time period during which the network device provides service for the terminal device, or to obtain the time period during which the network device does not provide service for the terminal device. The terminal device can switch on the radio frequency for uplink and downlink communication during the time period when the network device provides service for the cell where the terminal device is located, and switch off the radio frequency to stop uplink and downlink communication during the time period when the network device does not plan to provide service for the cell where the terminal device is located, thereby improving the accuracy of signal transmission. Moreover, meaningless power consumption is avoided, achieving the purpose of power saving for the terminal device. Additionally, the terminal device can also determine valid resources in the cell network according to the above indication information.

Reference is made to FIG. 12, which shows a block diagram of another device for wireless communication according to an embodiment of the present disclosure. The device has the function of implementing the wireless communication method on the network device side described above. The function can be implemented by hardware, or by hardware executing corresponding software. The device may be the network device described above, or may be provided in the network device. As shown in FIG. 12, the device 1200 may include: a sending module 1210.

The sending module 1210 is configured to send first indication information to a terminal device. The first indication information is used to determine first information and/or second information. The first information is used to determine a time domain resource in which the network device provides service for a first cell. The second information is used to determine a time domain resource in which the network device does not provide service for the first cell. The first cell is a serving cell of the terminal device.

In some embodiments, the first information includes at least one of: time information for providing service for the first cell, time information for providing downlink service for the first cell, or time information for providing uplink service for the first cell.

In some embodiments, the first indication information being used to determine the first information includes:
the first indication information is used to indicate the first information; or
the first indication information is used to indicate the second information, and the terminal device determines the first information according to the second information.

In some embodiments, the second information includes at least one of: time information for not providing service for the first cell, time information for not providing downlink service for the first cell, or time information for not providing uplink service for the first cell.

In some embodiments, the first indication information being used to determine the second information includes:
the first indication information is used to indicate the second information; or
the first indication information is used to indicate the first information, and the terminal device determines the second information according to the first information.

In some embodiments, the first indication information is carried in at least one of: DCI, RRC information, MAC CE, or system message.

In some embodiments, the first indication information being used to determine the first information and/or the second information includes:
the first indication information is used to determine at least one of: an association relationship between at least one cell group and service time of the at least one cell group, a number of cell groups, a service time length of at least one cell group, a service time period length, a start position of service time of at least one cell group, a cell group number where the first cell is located, or a service configuration of the first cell.

In some embodiments, the first information and/or the second information is determined based on at least one of: an association relationship between at least one cell group and service time of the at least one cell group, a number of cell groups, a service time length of at least one cell group, a service time period length, a start position of service time of at least one cell group, a cell group number where the first cell is located, or a service configuration of the first cell.

In some embodiments, the first information and/or the second information is determined based on an association relationship between at least one cell group and service time of the at least one cell group.

Here, the service time length in the i-th cell group includes the time length from i*S to (i+1)*S-1.

Here, i represents the number of the cell group, i = 0, 1, ..., N-1, N represents the number of cell groups, N is a positive integer, and S represents the service time length of each cell group.

In some embodiments, the start position of the service time of the 0-th cell group is the start position of a radio frame numbered T*F, where the service time period length is T radio frames, T is a positive integer, and F is an integer; or
the start position of the service time of the 0-th cell group is determined by the first indication information.

In some embodiments, the service time length S of each cell group is determined by the service time period length T and the number N of cell groups; or the service time length S of each cell group is determined by the first indication information.

In some embodiments, the service time length S of each cell group is determined by the service time period length T and the number N of cell groups, including one of the following cases:
the service time length of each cell group is S = (T*10)/N;
the service time length of each cell group except the last cell group is S = ceil ((T*10)/N), and the service time length of the last cell group is (T*10)-(N-1)*S, where ceil means rounding up;
the service time length of each cell group except the last cell group is S = floor((T*10)/N), and the service time length of the last cell group is (T*10)-(N-1)*S, where floor means rounding down;
where the service time period length is T radio frames.

In some embodiments, the resource for transmission in the first cell includes at least one of:
a resource in the first cell for transmitting a first downlink channel or signal; or
a resource in the first cell for transmitting a first uplink channel or signal.

In some embodiments, the first downlink channel or signal includes at least one of: SSB, CSI-RS, RLM-RS, PRS, PDCCH, or PDSCH; and/or the first uplink channel or signal includes at least one of: PRACH, PUSCH, PUCCH, or SRS.

The technical solutions provided by the embodiments of the present disclosure allow the network device to send indication information to the terminal device, so that the terminal device can obtain the time period during which the network device provides service for the terminal device, or obtain the time period during which the network device does not provide service for the terminal device. The terminal device can switch on the radio frequency for uplink and downlink communication during the time period when the network device provides service for the cell where the terminal device is located, and switch off the radio frequency to stop uplink and downlink communication during the time period when the network device does not plan to provide service for the cell where the terminal device is located, thereby improving the accuracy of signal transmission. Moreover, meaningless power consumption is avoided, achieving the purpose of power saving for the terminal device. Additionally, the terminal device can also determine valid resources in the cell network according to the above indication information.

It should be noted that in the above apparatus embodiments, when implementing their functions, the division of the above functional modules is only used as an example for illustration. In practical applications, the above functions may be assigned to be completed by different functional modules as needed, that is, the internal structure of the device is divided into different functional modules to complete all or part of the functions described above.

Regarding the device in the above embodiments, the specific manner in which each module performs operations has been described in detail in the embodiments related to the method, and will not be explained in detail here. For details not explained in detail in the device embodiments, reference may be made to the above method embodiments.

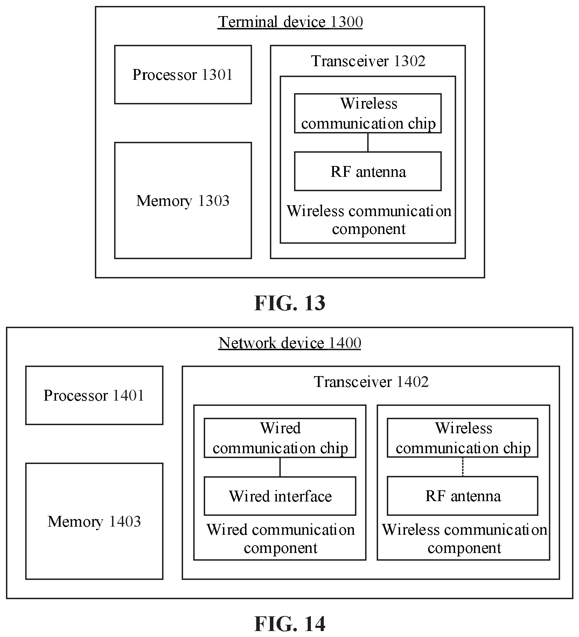

Reference is made to FIG. 13, which shows a schematic structural diagram of a terminal device according to an embodiment of the present disclosure. The terminal device 1300 may include: a processor 1301, a transceiver 1302, and a memory 1303. The transceiver 1302 is used to implement transmission or reception functions, such as implementing the function of the receiving module 1110 described above. The processor 1301 may be used to implement other processing functions or control transmission and/or reception, such as implementing the function of the processing module 1120 described above.

The processor 1301 includes one or more processing cores. The processor 1301 executes software programs and modules to perform various functional applications and information processing.

The transceiver 1302 may include a receiver and a transmitter. For example, the receiver and the transmitter may be implemented as a single wireless communication component, which may include a wireless communication chip and a radio frequency antenna.

The memory 1303 may be connected to the processor 1301 and the transceiver 1302.

The memory 1303 may be used to store a computer program executed by the processor. The processor 1301 is used to execute the computer program to implement the various steps in the above method embodiments.

In some embodiments, the transceiver 1302 is configured to receive first indication information sent by a network device. The first indication information is used to determine first information and/or second information. The first information is used to determine a time domain resource in which the network device provides service for a first cell. The second information is used to determine a time domain resource in which the network device does not provide service for the first cell. The first cell is a serving cell of the terminal device.

In some embodiments, the processor 1301 is configured to determine, according to the first indication information, a resource for transmission in the first cell and/or a resource not for transmission in the first cell.

For details not described in detail in this embodiment, reference may be made to the above embodiments, which will not be repeated here.

In addition, the memory may be implemented by any type of volatile or non-volatile storage device or a combination thereof. The volatile or non-volatile storage device includes, but is not limited to: magnetic disks or optical disks, Electrically Erasable Programmable Read-Only Memory (EEPROM), Erasable Programmable Read-Only Memory (EPROM), Static Random Access Memory (SRAM), Read-Only Memory (ROM), magnetic memory, flash memory, Programmable Read-Only Memory (PROM).

Reference is made to FIG. 14, which shows a schematic structural diagram of a network device 1400 according to an embodiment of the present disclosure. The network device 1400 may be used to perform the method steps performed by the network device in the above embodiments. The network device 1400 may include: a processor 1401, a transceiver 1402, and a memory 1403. The transceiver 1402 is used to implement transmission or reception functions, such as implementing the function of the sending module 1210 described above. The processor 1401 may be used to implement other processing functions or control transmission and/or reception.

The processor 1401 includes one or more processing cores. The processor 1401 executes software programs and modules to perform various functional applications and information processing.

The transceiver 1402 may include a receiver and a transmitter. For example, the transceiver 1402 may include a wired communication component, which may include a wired communication chip and a wired interface (such as an optical fiber interface). Optionally, the transceiver 1402 may also include a wireless communication component, which may include a wireless communication chip and a radio frequency antenna.

The memory 1403 may be connected to the processor 1401 and the transceiver 1402.

The memory 1403 may be used to store a computer program executed by the processor. The processor 1401 is used to execute the computer program to implement the various steps performed by the network device in the above method embodiments.

In addition, the memory 1403 may be implemented by any type of volatile or non-volatile storage device or a combination thereof. The volatile or non-volatile storage device includes, but is not limited to: magnetic disks or optical disks, Electrically Erasable Programmable Read-Only Memory (EEPROM), Erasable Programmable Read-Only Memory (EPROM), Static Random Access Memory (SRAM), Read-Only Memory (ROM), magnetic memory, flash memory, Programmable Read-Only Memory (PROM).

In some embodiments, the transceiver 1402 is configured to send first indication information to a terminal device. The first indication information is used to determine first information and/or second information. The first information is used to determine a time domain resource in which the network device provides service for a first cell. The second information is used to determine a time domain resource in which the network device does not provide service for the first cell. The first cell is a serving cell of the terminal device.

For details not described in detail in this embodiment, reference may be made to the above embodiments, which will not be repeated here.

An embodiment of the present disclosure also provides a computer-readable storage medium. A computer program is stored in the storage medium, and the computer program is configured to be executed by a processor to implement the wireless communication method on the terminal device side as described above, or to implement the wireless communication method on the network device side as described above. In some embodiments, the computer-readable storage medium may include: ROM (Read-Only Memory), RAM (Random-Access Memory), SSD (Solid State Drives), or optical disks, etc. The random access memory may include ReRAM (Resistance Random Access Memory) and DRAM (Dynamic Random Access Memory).

An embodiment of the present disclosure also provides a chip. The chip includes a programmable logic circuit and/or program instructions. When the chip runs, it is configured to implement the wireless communication method on the terminal device side as described above, or to implement the wireless communication method on the network device side as described above.

An embodiment of the present disclosure also provides a computer program product. The computer program product includes computer instructions stored in a computer-readable storage medium. A processor reads and executes the computer instructions from the computer-readable storage medium to implement the wireless communication method on the terminal device side as described above, or to implement the wireless communication method on the network device side as described above.

It should be understood that "indication" mentioned in the embodiments of the present disclosure may be direct indication, may be indirect indication, or may represent an association relationship. For example, A indicating B may mean that A directly indicates B, for example, B can be obtained through A; may mean that A indirectly indicates B, for example, A indicates C, and B can be obtained through C; may also mean that there is an association relationship between A and B.

In the description of the embodiments of the present disclosure, the term "corresponding" may indicate that there is a direct or indirect correspondence between the two, may also indicate that there is an association relationship between the two, or may indicate an indication and indicated, configuration and configured, etc. relationship.

In some embodiments of the present disclosure, "predefined" may be implemented by pre-storing corresponding codes, tables, or other means that can be used to indicate relevant information in the device (e.g., including terminal devices and network devices). The present disclosure does not limit its specific implementation. For example, predefined may refer to defined in a protocol.

In some embodiments of the present disclosure, the "protocol" may refer to a standard protocol in the field of communications, for example, may include LTE protocol, NR protocol, and related protocols applied in future communication systems, which is not limited in the present disclosure.

"Multiple" as mentioned herein means two or more. "And/or" describes the association relationship of associated objects, indicating that there can be three relationships. For example, A and/or B can indicate: A exists alone, both A and B exist, and B exists alone. The character "/" generally indicates that the associated objects are in an "or" relationship.

"Greater than or equal to" as mentioned herein may mean greater than or equal to, or greater than; "less than or equal to" may mean less than or equal to, or less than.

In addition, the step numbers described in this document only exemplarily show a possible execution sequence of the steps. In some other embodiments, the above steps may also be executed not in the order of the numbers, such as two steps with different numbers being executed simultaneously, or two steps with different numbers being executed in the opposite order to that shown in the figures, which is not limited in the embodiments of the present disclosure.

Those skilled in the art should realize that in the above one or more examples, the functions described in the embodiments of the present disclosure can be implemented in hardware, software, firmware, or any combination thereof. When implemented in software, these functions can be stored in a computer-readable medium or transmitted as one or more instructions or code on a computer-readable medium. Computer-readable media includes computer storage media and communication media, where the communication media includes any medium that facilitates the transfer of a computer program from one place to another. A storage medium may be any available medium that a general-purpose or special-purpose computer can access.

The above are only exemplary embodiments of the present disclosure and are not intended to limit the present disclosure. Any modifications, equivalent replacements, improvements, etc. made within the spirit and principles of the present disclosure shall be included in the protection scope of the present disclosure.

## Claims

1. A wireless communication method, the method being performed by a terminal device and comprising:
receiving first indication information sent by a network device, the first indication information being used to determine first information and/or second information, the first information being used to determine a time domain resource in which the network device provides service for a first cell, the second information being used to determine a time domain resource in which the network device does not provide service for the first cell, the first cell being a serving cell of the terminal device;
determining, according to the first indication information, a resource for transmission in the first cell and/or a resource not for transmission in the first cell.

2. The method according to claim 1, wherein the first information comprises at least one of: time information for providing service for the first cell, time information for providing downlink service for the first cell, or time information for providing uplink service for the first cell.

3. The method according to claim 1 or 2, wherein the first indication information being used to determine the first information comprises:
the first indication information being used to indicate the first information; or
the first indication information being used to indicate the second information, wherein the terminal device determines the first information according to the second information.

4. The method according to any one of claims 1 to 3, wherein the second information comprises at least one of: time information for not providing service for the first cell, time information for not providing downlink service for the first cell, or time information for not providing uplink service for the first cell.

5. The method according to any one of claims 1 to 4, wherein the first indication information being used to determine the second information comprises:
the first indication information being used to indicate the second information; or
the first indication information being used to indicate the first information, wherein the terminal device determines the second information according to the first information.

6. The method according to any one of claims 1 to 5, wherein the determining, according to the first indication information, a resource for transmission in the first cell and/or a resource not for transmission in the first cell, comprises at least one of:
determining, according to the first indication information, a downlink resource for transmission in the first cell;
determining, according to the first indication information, a downlink resource not for transmission in the first cell;
determining, according to the first indication information, an uplink resource for transmission in the first cell; or
determining, according to the first indication information, an uplink resource not for transmission in the first cell.

7. The method according to any one of claims 1 to 6, wherein the first indication information is carried in at least one of: Downlink Control Information (DCI), Radio Resource Control (RRC) information, Medium Access Control Control Element (MAC CE), or system message.

8. The method according to any one of claims 1 to 7, wherein the first indication information being used to determine the first information and/or the second information comprises:
the first indication information being used to determine at least one of: an association relationship between at least one cell group and service time of the at least one cell group, a number of cell groups, a service time length of at least one cell group, a service time period length, a start position of service time of at least one cell group, a cell group number where the first cell is located, or a service configuration of the first cell.

9. The method according to any one of claims 1 to 8, wherein the first information and/or the second information is determined based on at least one of: an association relationship between at least one cell group and service time of the at least one cell group, a number of cell groups, a service time length of at least one cell group, a service time period length, a start position of service time of at least one cell group, a cell group number where the first cell is located, or a service configuration of the first cell.

10. The method according to claim 8 or 9, wherein the first information and/or the second information is determined based on an association relationship between at least one cell group and service time of the at least one cell group, wherein
a service time length in an i-th cell group comprises a time length from i*S to (i+1)*S-1,
wherein i represents a number of the cell group, i = 0, 1, ..., N-1, N represents the number of cell groups, N is a positive integer, and S represents a service time length of each cell group.

11. The method according to claim 10, wherein a start position of a service time of a 0-th cell group is a start position of a radio frame numbered T*F, wherein a service time period length is T radio frames, T is a positive integer, and F is an integer; or
the start position of the service time of the 0-th cell group is determined by the first indication information.

12. The method according to claim 10 or 11, wherein the service time length S of each cell group is determined by a service time period length T and the number N of cell groups; or
the service time length S of each cell group is determined by the first indication information.

13. The method according to claim 12, wherein the service time length S of each cell group is determined by the service time period length T and the number N of cell groups, comprises one of the following cases:
the service time length of each cell group is S = (T*10)/N;
the service time length of each cell group except a last cell group is S = ceil ((T*10)/N), and the service time length of the last cell group is (T*10)-(N-1)*S, wherein ceil represents rounding up;
the service time length of each cell group except the last cell group is S = floor((T*10)/N), and the service time length of the last cell group is (T*10)-(N-1)*S, wherein floor represents rounding down;
wherein the service time period length is T radio frames.

14. The method according to any one of claims 8 to 13, wherein the first information and/or the second information is determined based on the service configuration of the first cell, wherein
when the service configuration of the first cell is configured as discontinuous service or when the service configuration of the first cell is not configured as continuous service, the terminal device determines the first information and/or the second information; or
when the service configuration of the first cell is configured as continuous service or when the service configuration of the first cell is not configured as discontinuous service, the terminal device does not determine the first information and/or the second information.

15. The method according to any one of claims 1 to 14, wherein the resource for transmission in the first cell comprises at least one of:
a resource in the first cell for transmitting a first downlink channel or signal; or
a resource in the first cell for transmitting a first uplink channel or signal.

16. The method according to claim 15, wherein the first indication information is used to determine the first information, and the resource for transmission in the first cell comprises a resource in the first cell for transmitting the first downlink channel or signal;
the determining, according to the first indication information, the resource for transmission in the first cell comprises:
determining the resource in the first cell for transmitting the first downlink channel or signal according to an intersection between the time domain resource in which the network device provides service for the first cell and a time domain resource allocated by the network device for transmitting the first downlink channel or signal, wherein the time domain resource in which the network device provides service for the first cell is determined based on the first information; or
determining the resource in the first cell for transmitting the first downlink channel or signal according to an intersection between the time domain resource in which the network device provides downlink service for the first cell and the time domain resource allocated by the network device for transmitting the first downlink channel or signal, wherein the time domain resource in which the network device provides downlink service for the first cell is determined based on the first information.

17. The method according to claim 15, wherein the first indication information is used to determine the first information, and the resource for transmission in the first cell comprises the resource in the first cell for transmitting the first uplink channel or signal;
the determining, according to the first indication information, the resource for transmission in the first cell comprises:
determining the resource in the first cell for transmitting the first uplink channel or signal according to an intersection between the time domain resource in which the network device provides service for the first cell and a time domain resource allocated by the network device for transmitting the first uplink channel or signal, wherein the time domain resource in which the network device provides service for the first cell is determined based on the first information; or
determining the resource in the first cell for transmitting the first uplink channel or signal according to an intersection between the time domain resource in which the network device provides uplink service for the first cell and the time domain resource allocated by the network device for transmitting the first uplink channel or signal, wherein the time domain resource in which the network device provides uplink service for the first cell is determined based on the first information.

18. The method according to any one of claims 15 to 17, wherein
the first downlink channel or signal comprises at least one of: Synchronization Signal Block (SSB), Channel State Information Reference Signal (CSI-RS), Radio Link Monitoring Reference Signal (RLM-RS), Positioning Reference Signal (PRS), Physical Downlink Control Channel (PDCCH), or Physical Downlink Shared Channel (PDSCH); and/or
the first uplink channel or signal comprises at least one of: Physical Random Access Channel (PRACH), Physical Uplink Shared Channel (PUSCH), Physical Uplink Control Channel (PUCCH), or Sounding Reference Signal (SRS).

19. The method according to any one of claims 15 to 18, wherein the first downlink channel or signal comprises Radio Link Monitoring Reference Signal (RLM-RS), and a reporting period of an In Synchronization/Out Of Synchronization (IS/OOS) state comprises at least one of the following cases:
in a non-Discontinuous Reception (non-DRX) state, the reporting period of the IS/OOS state is a maximum value among a shortest period among periods of all configured RLM-RS resources, 10ms, and a time length of time domain resource in which the network device provides service for the first cell once;
in the non-DRX state, the reporting period of the IS/OOS state is a maximum value among the shortest period among the periods of all configured RLM-RS resources, 10ms, and a time length of time domain resource in which the network device provides downlink service for the first cell once;
in a DRX state, the reporting period of the IS/OOS state is a maximum value among the shortest period among the periods of all configured RLM-RS resources, a DRX period, and the time length of time domain resource in which the network device provides service for the first cell once; or
in the DRX state, the reporting period of the IS/OOS state is a maximum value among the shortest period among the periods of all configured RLM-RS resources, the DRX period, and the time length of time domain resource in which the network device provides downlink service for the first cell once.

20. The method according to any one of claims 15 to 18, wherein the first downlink channel or signal comprises Physical Downlink Control Channel (PDCCH), and the Physical Downlink Shared Channel (PDSCH) scheduled by the PDCCH is used to carry a Random Access Response (RAR), and the method further comprises:
monitoring the PDCCH within a valid RAR window, wherein the valid RAR window is determined according to the time domain resource in which the network device provides service for the first cell or the time domain resource in which the network device provides downlink service for the first cell.

21. The method according to any one of claims 15 to 18, wherein the first uplink channel or signal comprises Physical Random Access Channel (PRACH), and a PRACH Occasion (RO) resource corresponding to the PRACH is determined according to a mapping relationship between RO resources and Synchronization Signal and PBCH block (SSB) indices, and the mapping relationship between the RO resources and the SSB indices is determined based on one of:
within one association period, first determining valid RO resources in the first cell according to the first indication information and RO resources configured by the network device, and then performing mapping according to an association relationship between the valid RO resources and the SSB indices;
within one association pattern period, first determining valid RO resources in the first cell according to the first indication information and the RO resources configured by the network device, and then performing mapping according to the association relationship between the valid RO resources and the SSB indices;
within a time length of time domain resource in which the network device provides service for the first cell once, first determining RO resources in the first cell according to the RO resources configured by the network device, and then performing mapping according to an association relationship between the RO resources and the SSB indices;
within a time length of time domain resource in which the network device provides uplink service for the first cell once, first determining RO resources in the first cell according to the RO resources configured by the network device, and then performing mapping according to the association relationship between the RO resources and the SSB indices.

22. The method according to any one of claims 1 to 21, wherein the method further comprises at least one of:
not performing downlink reception and uplink transmission within a time length for which the network device does not provide service for the first cell;
not performing downlink reception within a time length for which the network device does not provide downlink service for the first cell;
not performing uplink transmission within a time length for which the network device does not provide uplink service for the first cell;
performing Global Navigation Satellite System (GNSS) measurement within the time length for which the network device does not provide service for the first cell;
performing GNSS measurement within the time length for which the network device does not provide downlink service for the first cell; or
performing GNSS measurement within the time length for which the network device does not provide uplink service for the first cell.

23. A wireless communication method, the method being performed by a network device and comprising:
sending first indication information to a terminal device, the first indication information being used to determine first information and/or second information, the first information being used to determine a time domain resource in which the network device provides service for a first cell, the second information being used to determine a time domain resource in which the network device does not provide service for the first cell, the first cell being a serving cell of the terminal device.

24. The method according to claim 23, wherein the first information comprises at least one of: time information for providing service for the first cell, time information for providing downlink service for the first cell, or time information for providing uplink service for the first cell.

25. The method according to claim 23 or 24, wherein the first indication information being used to determine the first information comprises:
the first indication information being used to indicate the first information; or
the first indication information being used to indicate the second information, wherein the terminal device determines the first information according to the second information.

26. The method according to any one of claims 23 to 25, wherein the second information comprises at least one of: time information for not providing service for the first cell, time information for not providing downlink service for the first cell, or time information for not providing uplink service for the first cell.

27. The method according to any one of claims 23 to 26, wherein the first indication information being used to determine the second information comprises:
the first indication information being used to indicate the second information; or
the first indication information being used to indicate the first information,wherein the terminal device determines the second information according to the first information.

28. The method according to any one of claims 23 to 27, wherein the first indication information is carried in at least one of: Downlink Control Information (DCI), Radio Resource Control (RRC) information, Medium Access Control Control Element (MAC CE), or system message.

29. The method according to any one of claims 23 to 28, wherein the first indication information being used to determine the first information and/or the second information comprises:
the first indication information being used to determine at least one of: an association relationship between at least one cell group and service time of the at least one cell group, a number of cell groups, a service time length of at least one cell group, a service time period length, a start position of service time of at least one cell group, a cell group number where the first cell is located, or a service configuration of the first cell.

30. The method according to any one of claims 23 to 29, wherein the first information and/or the second information is determined based on at least one of: an association relationship between at least one cell group and service time of the at least one cell group, a number of cell groups, a service time length of at least one cell group, a service time period length, a start position of service time of at least one cell group, a cell group number where the first cell is located, or a service configuration of the first cell.

31. The method according to claim 29 or 30, wherein the first information and/or the second information is determined based on an association relationship between at least one cell group and service time of the at least one cell group, wherein
a service time length in an i-th cell group comprises a time length from i*S to (i+1)*S-1,
wherein i represents a number of the cell group, i = 0, 1, ..., N-1, N represents the number of cell groups, N is a positive integer, and S represents a service time length of each cell group.

32. The method according to claim 31, wherein a start position of a service time of a 0-th cell group is a start position of a radio frame numbered T*F, wherein a service time period length is T radio frames, T is a positive integer, and F is an integer; or
the start position of the service time of the 0-th cell group is determined by the first indication information.

33. The method according to claim 31 or 32, wherein the service time length S of each cell group is determined by a service time period length T and the number N of cell groups; or
the service time length S of each cell group is determined by the first indication information.

34. The method according to claim 33, wherein the service time length S of each cell group is determined by the service time period length T and the number N of cell groups, comprises one of the following cases:
the service time length of each cell group is S = (T*10)/N;
the service time length of each cell group except a last cell group is S = ceil ((T*10)/N), and the service time length of the last cell group is (T*10)-(N-1)*S, wherein ceil represents rounding up;
the service time length of each cell group except the last cell group is S = floor((T*10)/N), and the service time length of the last cell group is (T*10)-(N-1)*S, wherein floor represents rounding down;
wherein the service time period length is T radio frames.

35. The method according to any one of claims 23 to 34, wherein a resource for transmission in the first cell comprises at least one of:
a resource in the first cell for transmitting a first downlink channel or signal; or
a resource in the first cell for transmitting a first uplink channel or signal.

36. The method according to claim 35, wherein
the first downlink channel or signal comprises at least one of: Synchronization Signal Block (SSB), Channel State Information Reference Signal (CSI-RS), Radio Link Monitoring Reference Signal (RLM-RS), Positioning Reference Signal (PRS), Physical Downlink Control Channel (PDCCH), or Physical Downlink Shared Channel (PDSCH); and/or
the first uplink channel or signal comprises at least one of: Physical Random Access Channel (PRACH), Physical Uplink Shared Channel (PUSCH), Physical Uplink Control Channel (PUCCH), or Sounding Reference Signal (SRS).

37. A device for wireless communication, wherein the device is provided in a terminal device, and the device comprises:
a receiving module, configured to receive first indication information sent by a network device, the first indication information being used to determine first information and/or second information, the first information being used to determine a time domain resource in which the network device provides service for a first cell, the second information being used to determine a time domain resource in which the network device does not provide service for the first cell, the first cell being a serving cell of the terminal device;
a processing module, configured to determine, according to the first indication information, a resource for transmission in the first cell and/or a resource not for transmission in the first cell.

38. The device according to claim 37, wherein the first information comprises at least one of: time information for providing service for the first cell, time information for providing downlink service for the first cell, or time information for providing uplink service for the first cell.

39. The device according to claim 37 or 38, wherein the first indication information being used to determine the first information comprises:
the first indication information being used to indicate the first information; or
the first indication information being used to indicate the second information, wherein the terminal device determines the first information according to the second information.

40. The device according to any one of claims 37 to 39, wherein the second information comprises at least one of: time information for not providing service for the first cell, time information for not providing downlink service for the first cell, or time information for not providing uplink service for the first cell.

41. The device according to any one of claims 37 to 40, wherein the first indication information being used to determine the second information comprises:
the first indication information being used to indicate the second information; or
the first indication information being used to indicate the first information, wherein the terminal device determines the second information according to the first information.

42. The device according to any one of claims 37 to 41, wherein the processing module is configured to perform at least one of:
determining, according to the first indication information, a downlink resource for transmission in the first cell;
determining, according to the first indication information, a downlink resource not for transmission in the first cell;
determining, according to the first indication information, an uplink resource for transmission in the first cell; or
determining, according to the first indication information, an uplink resource not for transmission in the first cell.

43. The device according to any one of claims 37 to 42, wherein the first indication information is carried in at least one of: Downlink Control Information (DCI), Radio Resource Control (RRC) information, Medium Access Control Control Element (MAC CE), or system message.

44. The device according to any one of claims 37 to 43, wherein the first indication information being used to determine the first information and/or the second information comprises:
the first indication information is used to determine at least one of: an association relationship between at least one cell group and service time of the at least one cell group, a number of cell groups, a service time length of at least one cell group, a service time period length, a start position of service time of at least one cell group, a cell group number where the first cell is located, or a service configuration of the first cell.

45. The device according to any one of claims 37 to 44, wherein the first information and/or the second information is determined based on at least one of: an association relationship between at least one cell group and service time of the at least one cell group, a number of cell groups, a service time length of at least one cell group, a service time period length, a start position of service time of at least one cell group, a cell group number where the first cell is located, or a service configuration of the first cell.

46. The device according to claim 44 or 45, wherein the first information and/or the second information is determined based on an association relationship between at least one cell group and service time of the at least one cell group, wherein
a service time length in an i-th cell group comprises a time length from i*S to (i+1)*S-1,
wherein i represents a number of the cell group, i = 0, 1, ..., N-1, N represents the number of cell groups, N is a positive integer, and S represents a service time length of each cell group.

47. The device according to claim 46, wherein a start position of a service time of a 0-th cell group is a start position of a radio frame numbered T*F, wherein a service time period length is T radio frames, T is a positive integer, and F is an integer; or
the start position of the service time of the 0-th cell group is determined by the first indication information.

48. The device according to claim 46 or 47, wherein the service time length S of each cell group is determined by a service time period length T and the number N of cell groups; or
the service time length S of each cell group is determined by the first indication information.

49. The device according to claim 48, wherein the service time length S of each cell group is determined by the service time period length T and the number N of cell groups, comprises one of the following cases:
the service time length of each cell group is S = (T*10)/N;
the service time length of each cell group except a last cell group is S = ceil ((T*10)/N), and the service time length of the last cell group is (T*10)-(N-1)*S, wherein ceil represents rounding up;
the service time length of each cell group except the last cell group is S = floor((T*10)/N), and the service time length of the last cell group is (T*10)-(N-1)*S, wherein floor represents rounding down;
wherein the service time period length is T radio frames.

50. The device according to any one of claims 44 to 49, wherein the first information and/or the second information is determined based on the service configuration of the first cell, wherein
when the service configuration of the first cell is configured as discontinuous service or when the service configuration of the first cell is not configured as continuous service, the terminal device determines the first information and/or the second information; or
when the service configuration of the first cell is configured as continuous service or when the service configuration of the first cell is not configured as discontinuous service, the terminal device does not determine the first information and/or the second information.

51. The device according to any one of claims 37 to 50, wherein the resource for transmission in the first cell comprises at least one of:
a resource in the first cell for transmitting a first downlink channel or signal; or
a resource in the first cell for transmitting a first uplink channel or signal.

52. The device according to claim 51, wherein the first indication information is used to determine the first information, and the resource for transmission in the first cell comprises the resource in the first cell for transmitting the first downlink channel or signal;
the processing module is configured to determine the resource in the first cell for transmitting the first downlink channel or signal according to an intersection between the time domain resource in which the network device provides service for the first cell and a time domain resource allocated by the network device for transmitting the first downlink channel or signal, wherein the time domain resource in which the network device provides service for the first cell is determined based on the first information; or
the processing module is configured to determine the resource in the first cell for transmitting the first downlink channel or signal according to an intersection between the time domain resource in which the network device provides downlink service for the first cell and the time domain resource allocated by the network device for transmitting the first downlink channel or signal, wherein the time domain resource in which the network device provides downlink service for the first cell is determined based on the first information.

53. The device according to claim 51, wherein the first indication information is used to determine the first information, and the resource for transmission in the first cell comprises the resource in the first cell for transmitting the first uplink channel or signal;
the processing module is configured to determine the resource in the first cell for transmitting the first uplink channel or signal according to an intersection between the time domain resource in which the network device provides service for the first cell and a time domain resource allocated by the network device for transmitting the first uplink channel or signal, wherein the time domain resource in which the network device provides service for the first cell is determined based on the first information; or
the processing module is configured to determine the resource in the first cell for transmitting the first uplink channel or signal according to an intersection between the time domain resource in which the network device provides uplink service for the first cell and the time domain resource allocated by the network device for transmitting the first uplink channel or signal, wherein the time domain resource in which the network device provides uplink service for the first cell is determined based on the first information.

54. The device according to any one of claims 51 to 53, wherein
the first downlink channel or signal comprises at least one of: Synchronization Signal Block (SSB), Channel State Information Reference Signal (CSI-RS), Radio Link Monitoring Reference Signal (RLM-RS), Positioning Reference Signal (PRS), Physical Downlink Control Channel (PDCCH), or Physical Downlink Shared Channel (PDSCH); and/or
the first uplink channel or signal comprises at least one of: Physical Random Access Channel (PRACH), Physical Uplink Shared Channel (PUSCH), Physical Uplink Control Channel (PUCCH), or Sounding Reference Signal (SRS).

55. The device according to any one of claims 51 to 54, wherein the first downlink channel or signal comprises RLM-RS, and a reporting period of an In Synchronization/Out Of Synchronization (IS/OOS) state comprises at least one of the following cases:
in a non-Discontinuous Reception (non-DRX) state, the reporting period of the IS/OOS state is a maximum value among a shortest period among periods of all configured RLM-RS resources, 10ms, and a time length of time domain resource in which the network device provides service for the first cell once;
in the non-DRX state, the reporting period of the IS/OOS state is a maximum value among the shortest period among the periods of all configured RLM-RS resources, 10ms, and a time length of time domain resource in which the network device provides downlink service for the first cell once;
in a DRX state, the reporting period of the IS/OOS state is a maximum value among the shortest period among the periods of all configured RLM-RS resources, a DRX period, and the time length of time domain resource in which the network device provides service for the first cell once; or
in the DRX state, the reporting period of the IS/OOS state is a maximum value among the shortest period among the periods of all configured RLM-RS resources, the DRX period, and the time length of time domain resource in which the network device provides downlink service for the first cell once.

56. The device according to any one of claims 51 to 54, wherein the first downlink channel or signal comprises Physical Downlink Control Channel (PDCCH), and the Physical Downlink Shared Channel (PDSCH) scheduled by the PDCCH is used to carry a Random Access Response (RAR), and the processing module is further configured to monitor the PDCCH within a valid RAR window, wherein the valid RAR window is determined according to the time domain resource in which the network device provides service for the first cell or the time domain resource in which the network device provides downlink service for the first cell.

57. The device according to any one of claims 51 to 54, wherein the first uplink channel or signal comprises Physical Random Access Channel (PRACH), and a PRACH Occasion (RO) resource corresponding to the PRACH is determined according to a mapping relationship between RO resources and SSB indices, and the mapping relationship between the RO resources and the SSB indices is determined based on one of:
within one association period, first determining valid RO resources in the first cell according to the first indication information and RO resources configured by the network device, and then performing mapping according to an association relationship between the valid RO resources and the SSB indices;
within one association pattern period, first determining valid RO resources in the first cell according to the first indication information and the RO resources configured by the network device, and then performing mapping according to the association relationship between the valid RO resources and the SSB indices;
within a time length of time domain resource in which the network device provides service for the first cell once, first determining RO resources in the first cell according to the RO resources configured by the network device, and then performing mapping according to an association relationship between the RO resources and the SSB indices;
within a time length of time domain resource in which the network device provides uplink service for the first cell once, first determining RO resources in the first cell according to the RO resources configured by the network device, and then performing mapping according to the association relationship between the RO resources and the SSB indices.

58. The device according to any one of claims 37 to 57, wherein the processing module is further configured to perform at least one of:
not performing downlink reception and uplink transmission within a time length for which the network device does not provide service for the first cell;
not performing downlink reception within a time length for which the network device does not provide downlink service for the first cell;
not performing uplink transmission within a time length for which the network device does not provide uplink service for the first cell;
performing Global Navigation Satellite System (GNSS) measurement within the time length for which the network device does not provide service for the first cell;
performing GNSS measurement within the time length for which the network device does not provide downlink service for the first cell; or
performing GNSS measurement within the time length for which the network device does not provide uplink service for the first cell.

59. A device for wireless communication, wherein the device is provided in a network device, and the device comprises:
a sending module, configured to send first indication information to a terminal device, the first indication information being used to determine first information and/or second information, the first information being used to determine a time domain resource in which the network device provides service for a first cell, the second information being used to determine a time domain resource in which the network device does not provide service for the first cell, the first cell being a serving cell of the terminal device.

60. The device according to claim 59, wherein the first information comprises at least one of: time information for providing service for the first cell, time information for providing downlink service for the first cell, or time information for providing uplink service for the first cell.

61. The device according to claim 59 or 60, wherein the first indication information being used to determine the first information comprises:
the first indication information being used to indicate the first information; or
the first indication information being used to indicate the second information, and the terminal device determines the first information according to the second information.

62. The device according to any one of claims 59 to 61, wherein the second information comprises at least one of: time information for not providing service for the first cell, time information for not providing downlink service for the first cell, or time information for not providing uplink service for the first cell.

63. The device according to any one of claims 59 to 62, wherein the first indication information being used to determine the second information comprises:
the first indication information being used to indicate the second information; or
the first indication information being used to indicate the first information, and the terminal device determines the second information according to the first information.

64. The device according to any one of claims 59 to 63, wherein the first indication information is carried in at least one of: Downlink Control Information (DCI), Radio Resource Control (RRC) information, Medium Access Control Control Element (MAC CE), or system message.

65. The device according to any one of claims 59 to 64, wherein the first indication information being used to determine the first information and/or the second information comprises:
the first indication information is used to determine at least one of: an association relationship between at least one cell group and service time of the at least one cell group, a number of cell groups, a service time length of at least one cell group, a service time period length, a start position of service time of at least one cell group, a cell group number where the first cell is located, or a service configuration of the first cell.

66. The device according to any one of claims 59 to 65, wherein the first information and/or the second information is determined based on at least one of: an association relationship between at least one cell group and service time of the at least one cell group, a number of cell groups, a service time length of at least one cell group, a service time period length, a start position of service time of at least one cell group, a cell group number where the first cell is located, or a service configuration of the first cell.

67. The device according to claim 65 or 66, wherein the first information and/or the second information is determined based on an association relationship between at least one cell group and service time of the at least one cell group, wherein
a service time length in an i-th cell group comprises a time length from i*S to (i+1)*S-1,
wherein i represents a number of the cell group, i = 0, 1, ..., N-1, N represents the number of cell groups, N is a positive integer, and S represents a service time length of each cell group.

68. The device according to claim 67, wherein a start position of a service time of a 0-th cell group is a start position of a radio frame numbered T*F, wherein a service time period length is T radio frames, T is a positive integer, and F is an integer; or
the start position of the service time of the 0-th cell group is determined by the first indication information.

69. The device according to claim 67 or 68, wherein the service time length S of each cell group is determined by a service time period length T and the number N of cell groups; or
the service time length S of each cell group is determined by the first indication information.

70. The device according to claim 69, wherein the service time length S of each cell group is determined by the service time period length T and the number N of cell groups, comprises one of the following cases:
the service time length of each cell group is S = (T*10)/N;
the service time length of each cell group except a last cell group is S = ceil ((T*10)/N), and the service time length of the last cell group is (T*10)-(N-1)*S, wherein ceil represents rounding up;
the service time length of each cell group except the last cell group is S = floor((T*10)/N), and the service time length of the last cell group is (T*10)-(N-1)*S, wherein floor represents rounding down;
wherein the service time period length is T radio frames.

71. The device according to any one of claims 59 to 69, wherein a resource for transmission in the first cell comprises at least one of:
a resource in the first cell for transmitting a first downlink channel or signal; or
a resource in the first cell for transmitting a first uplink channel or signal.

72. The device according to claim 71, wherein
the first downlink channel or signal comprises at least one of: Synchronization Signal Block (SSB), Channel State Information Reference Signal (CSI-RS), Radio Link Monitoring Reference Signal (RLM-RS), Positioning Reference Signal (PRS), Physical Downlink Control Channel (PDCCH), or Physical Downlink Shared Channel (PDSCH); and/or
the first uplink channel or signal comprises at least one of: Physical Random Access Channel (PRACH), Physical Uplink Shared Channel (PUSCH), Physical Uplink Control Channel (PUCCH), or Sounding Reference Signal (SRS).

73. A communication device, comprising a processor and a memory for storing a computer program, and the processor executes the computer program to implement the method according to any one of claims 1 to 22, or to implement the method according to any one of claims 23 to 36.

74. A computer-readable storage medium having stored a computer program, that when executed by a processor, implements the method according to any one of claims 1 to 22, or to implement the method according to any one of claims 23 to 36.

75. A chip, comprising a programmable logic circuit and/or program instructions, and when the chip runs, the chip is configured to implement the method according to any one of claims 1 to 22, or to implement the method according to any one of claims 23 to 36.

76. A computer program product, wherein the computer program product comprises computer instructions stored in a computer-readable storage medium, and a processor reads and executes the computer instructions from the computer-readable storage medium to implement the method according to any one of claims 1 to 22, or to implement the method according to any one of claims 23 to 36.
